# EUROPEAN PATENT APPLICATION

(11) **EP 4 564 778 A1**
(43) Date of publication of application: **04.06.2025**
(21) Application number: 23849340.7
(22) Date of filing: 31.07.2023
(51) Int. Cl.: H04L 47/50

(54) **SERVICE FLOW ATTRIBUTE CONFIGURATION METHOD, APPARATUS, AND SYSTEM**

(30) Priority: 05.08.2022 CN 202210938909
(71) Applicant: Huawei Technologies Co., Ltd., Shenzhen, Guangdong 518129 (CN)
(72) Inventor: SUN, Haiyang, Shenzhen, Guangdong 518129 (CN)
(74) Representative: Maiwald GmbH
(86) International application number: PCT/CN2023/110184
(87) International publication number: WO 2024/027633

(57) **Abstract**

A method for configuring a service flow attribute, an apparatus, and a system are provided. The method includes: A first network element obtains transmission time information of a first service flow. The transmission time information includes burst arrival time or burst arrival time adjustment information. The burst arrival time adjustment information is for determining adjusted burst arrival time. The first network element determines attribute information of the first service flow based on the transmission time information after receiving first indication information. The first network element sends the attribute information of the first service flow to a second network element.

## Description

### CROSS-REFERENCE TO RELATED APPLICATIONS

This application claims priority to Chinese Patent Application No. 202210938909.6, filed with the China National Intellectual Property Administration on August 5, 2022 and entitled "METHOD FOR CONFIGURING SERVICE FLOW ATTRIBUTE, APPARATUS, AND SYSTEM", which is incorporated herein by reference in its entirety.

### TECHNICAL FIELD

This application relates to the field of communication technologies, and in particular, to a method for configuring a service flow attribute, an apparatus, and a system.

### BACKGROUND

In a data forwarding process of a conventional ethernet network, when a large quantity of data packets arrive at a forwarding port in an instant, a problem of a high forwarding delay or a packet loss is caused. Consequently, a service that has a high requirement on reliability and a transmission delay cannot be met, for example, a service in a field such as automobile control and the industrial internet. For a requirement for reliable delay transmission, a related network standard of time sensitive networking (time sensitive networking, TSN) is currently defined. The standard provides a reliable delay transmission service based on layer 2 switching, and ensures reliability of data transmission of a time sensitive service and a predictable end-to-end transmission delay.

In a scenario in which the 3rd Generation Partnership Project (3rd generation partnership project, 3GPP) network interworks with the TSN, coordinated scheduling needs to be performed at each network node and an application server, to avoid a queuing delay of a data packet at the node. To improve transmission performance, coordinated scheduling optimization may be required. When the coordinated scheduling optimization occurs, attribute information of a service flow needs to be changed along with a change of transmission time-related parameters (for example, burst arrival time). Further, because the transmission time-related parameters may be negotiated for a plurality of rounds, the service flow attribute changes more frequently, and transmission stability is affected.

Therefore, how to avoid the frequent changes of the attribute information of the service flow due to the change of the transmission time-related parameters (for example, the burst arrival time) is a technical problem that needs to be resolved currently.

### SUMMARY

Embodiments of this application provide a method for configuring a service flow attribute, an apparatus, and a system, to avoid a problem that a service flow attribute frequently changes due to a change of burst arrival time.

According to a first aspect, a method for configuring a service flow attribute is provided. The method includes: A first network element obtains transmission time information of a first service flow. The transmission time information includes burst arrival time or burst arrival time adjustment information. The burst arrival time adjustment information is for determining adjusted burst arrival time. After receiving first indication information, the first network element determines attribute information of the first service flow based on the transmission time information, and sends the attribute information of the first service flow to a second network element.

In the foregoing implementation, after obtaining the transmission time information of the first service flow, for example, the burst arrival time (BAT) or the BAT adjustment information, the first network element does not immediately determine the attribute information of the first service flow, but determines the attribute information of the first service flow based on the transmission time information after receiving the first indication information. Therefore, a problem that a service flow attribute frequently changes due to a change of the burst arrival time can be avoided.

In a possible implementation, the first indication information is from an application function (AF) network element, a policy control function (PCF) network element, or a time sensitive communication time synchronization function (TSCTSF) network element.

In a possible implementation, the first indication information is an acknowledgment indication. Alternatively, the first indication information is for acknowledging the transmission time information or acknowledging that data transmission is performed based on the transmission time information. Alternatively, the first indication information indicates that the burst arrival time is not adjusted due to cross-layer scheduling optimization.

In the foregoing implementation, the first network element may acknowledge, based on the first indication information, that data transmission is performed based on the transmission time information, or that the burst arrival time of a first service is no longer adjusted due to the cross-layer scheduling optimization. In this case, the first network element determines the attribute information of the first service flow based on the adjusted burst arrival time, so that frequent changes of the service flow attribute due to the change of the burst arrival time can be avoided.

In a possible implementation, before that a first network element obtains transmission time information of a first service flow, the method further includes: The first network element receives second indication information. The second indication information indicates that the application function or an application supports adjusting packet sending time or the burst arrival time, or indicates that the first network element does not immediately determine the attribute information of the first service flow based on the burst arrival time.

In a possible implementation, based on the second indication information, the first network element does not immediately determine the attribute information of the first service flow based on the transmission time information.

In the foregoing implementation, based on the second indication information, the first network element may not immediately determine the attribute information of the first service flow based on the transmission time information, so that the frequent changes of the service flow attribute due to the change of the burst arrival time can be avoided.

In a possible implementation, the second indication information is from the AF network element, the PCF network element, or the TSCTSF network element.

In a possible implementation, that a first network element obtains burst arrival time adjustment information of a first service flow and receives first information includes:
sending, by the first network element, time sensitive communication assistance information to a radio access network, where the time sensitive communication assistance information includes the burst arrival time, and the burst arrival time includes time when a burst arrives at an ingress of the radio access network in a downlink direction, and/or time when the burst arrives at a terminal in an uplink direction;
receiving, by the first network element, the burst arrival time adjustment information from the radio access network;
sending, by the first network element, the burst arrival time adjustment information to the application function; and
receiving, by the first network element, the first indication information from the application function.

In a possible implementation, the transmission time information is from the radio access network network element, the AF network element, the PCF network element, or the TSCTSF network element.

In a possible implementation, the burst arrival time includes at least one of the following: uplink time sensitive communication assistance information (TSCAI) burst arrival time, downlink TSCAI burst arrival time, uplink time sensitive communication assistance container (TSCAC) burst arrival time, or downlink TSCAC burst arrival time.

In a possible implementation, the burst arrival time adjustment information is the adjusted burst arrival time, or an offset between the burst arrival time and the adjusted burst arrival time.

In a possible implementation, the attribute information of the first service flow includes at least one of the following:
an earliest transmit offset, where the earliest transmit offset is an earliest offset of when a talker sends the first data frame in a sending periodicity relative to a start time point of the sending periodicity;
a latest transmit offset, where the latest transmit offset is a latest offset of when the talker sends the first data frame in the sending periodicity relative to the start time point of the sending periodicity;
maximum latency, where the maximum latency is maximum latency of a data frame from the talker to a listener; or
sending time, where the sending time is a time offset used by the talker to transmit a data packet, and the time offset is between the earliest transmit offset and the latest transmit offset.

In a possible implementation, the first network element is a session management function network element. The session management function network element is configured as a centralized user configuration network element. The second network element is a centralized network configuration network element.

According to a second aspect, a method for configuring a service flow attribute is provided. The method includes: A first network element receives first information. The first information includes second indication information and/or alternative burst arrival time of a first service flow. The first network element obtains transmission time information of the first service flow based on the first information. The transmission time information includes burst arrival time or burst arrival time adjustment information. The burst arrival time adjustment information is for determining adjusted burst arrival time. The first network element determines attribute information of the first service flow based on the transmission time information, and sends the attribute information of the first service flow to a second network element.

In the foregoing implementation, after obtaining the transmission time information such as the burst arrival time (BAT) or the BAT adjustment information (for example, obtaining the BAT adjustment information through a negotiation process) of the first service flow based on the first information, the first network element determines the attribute information of the first service flow based on the transmission time information, so that the attribute information of the first service flow is determined based on the adjusted BAT only after the BAT adjustment information is obtained. Therefore, a problem that a service flow attribute frequently changes due to a change of the burst arrival time can be avoided.

In a possible implementation, the first information is from an AF network element, a PCF network element, or a TSCTSF network element.

In a possible implementation, the second indication information indicates that the application function supports adjusting the burst arrival time or packet sending time.

In a possible implementation, the transmission time information is from a radio access network network element.

In a possible implementation, the burst arrival time adjustment information is determined by the radio access network network element based on the alternative burst arrival time.

In a possible implementation, the burst arrival time includes at least one of the following: uplink TSCAI burst arrival time, downlink TSCAI burst arrival time, uplink TSCAC burst arrival time, or downlink TSCAC burst arrival time.

In a possible implementation, the burst arrival time adjustment information is the adjusted burst arrival time, or an offset between the burst arrival time and the adjusted burst arrival time.

In a possible implementation, the attribute information of the first service flow includes at least one of the following:
an earliest transmit offset, where the earliest transmit offset is an earliest offset of when the talker sends the first data frame in a sending periodicity relative to a start time point of the sending periodicity;
a latest transmit offset, where the latest transmit offset is a latest offset of when the talker sends the first data frame in the sending periodicity relative to the start time point of the sending periodicity;
maximum latency, where the maximum latency is maximum latency of a data frame from the talker to a listener; or
sending time, where the sending time is a time offset used by the talker to transmit a data packet, and the time offset is between the earliest transmit offset and the latest transmit offset.

In a possible implementation, the first network element is a session management function network element. The session management function network element is configured as a centralized user configuration network element. The second network element is a centralized network configuration network element.

According to a third aspect, a method for configuring a service flow attribute is provided. The method includes: determining that data transmission is performed based on acknowledged transmission time information of a first service flow, or burst arrival time of the first service flow is not adjusted due to cross-layer scheduling optimization, where the transmission time information includes the burst arrival time or burst arrival time adjustment information, and the burst arrival time adjustment information is for determining adjusted burst arrival time; and sending first indication information to a first network element.

In a possible implementation, the first indication information is an acknowledgment indication. Alternatively, the first indication information is for acknowledging the transmission time information or acknowledging that data transmission is performed based on the transmission time information. Alternatively, the first indication information indicates that the burst arrival time is not adjusted due to the cross-layer scheduling optimization.

In a possible implementation, before the sending first indication information to a first network element, the method further includes: sending second indication information to the first network element, where the second indication information indicates that an application function supports adjusting the burst arrival time or packet sending time.

According to a fourth aspect, a communication system is provided. The system includes a first network element, a second network element, and a third network element. The first network element is configured to perform the method in any implementation of the first aspect, and the third network element is configured to perform the method in any implementation of the third aspect.

According to a fifth aspect, a communication system is provided. The system includes a first network element and a second network element. The first network element is configured to perform the method in any implementation of the second aspect.

According to a sixth aspect, a communication apparatus is provided, including a processing unit and a transceiver unit. The processing unit is configured to: obtain transmission time information of a first service flow, where the transmission time information includes burst arrival time or burst arrival time adjustment information, and the burst arrival time adjustment information is for determining adjusted burst arrival time; after the transceiver unit receives first indication information, determine attribute information of the first service flow based on the transmission time information; and send the attribute information of the first service flow to a second network element by using the transceiver unit.

According to a seventh aspect, a communication apparatus is provided. The apparatus includes a processing unit and a transceiver unit. The transceiver unit is configured to: receive first information. The first information includes second indication information and/or alternative burst arrival time of a first service flow. The processing unit is configured to obtain transmission time information of the first service flow based on the first information, where the transmission time information includes burst arrival time or burst arrival time adjustment information, and the burst arrival time adjustment information is for determining adjusted burst arrival time; determine attribute information of the first service flow based on the transmission time information; and send the attribute information of the first service flow to a second network element by using the transceiver unit.

According to an eighth aspect, a communication apparatus is provided. The apparatus includes a processing unit and a transceiver unit. The processing unit is configured to: determine that data transmission is performed based on acknowledged transmission time information of a first service flow, or burst arrival time of the first service flow is not adjusted due to cross-layer scheduling optimization, where the transmission time information includes the burst arrival time or burst arrival time adjustment information, and the burst arrival time adjustment information is for determining adjusted burst arrival time; and send first indication information to a first network element by using the transceiver unit.

According to a ninth aspect, a communication apparatus is provided. The apparatus includes one or more processors and one or more memories. The one or more memories store one or more computer programs. The one or more computer programs include instructions, and when the instructions are executed by the one or more processors, the communication device is enabled to perform the method according to any implementation of the first aspect, or perform the method according to any implementation of the second aspect, or perform the method according to any implementation of the third aspect.

According to a tenth aspect, a computer-readable storage medium is provided. The computer-readable storage medium includes a computer program, and when the computer program is run on a computing device, the computing device is enabled to perform the method according to any implementation of the first aspect, or perform the method according to any implementation of the second aspect, or perform the method according to any implementation of the third aspect.

According to an eleventh aspect, a chip is provided. The chip is coupled to a memory, and is configured to read and execute program instructions stored in the memory, to implement the method according to any implementation of the first aspect, or perform the method according to any implementation of the second aspect, or perform the method according to any implementation of the third aspect.

According to a twelfth aspect, a computer program product is provided. When the computer program product is invoked by a computer, the computer is enabled to perform the method according to any implementation of the first aspect, or perform the method according to any implementation of the second aspect, or perform the method according to any implementation of the third aspect.

### BRIEF DESCRIPTION OF DRAWINGS

FIG. 1 is a schematic diagram of a fully centralized TSN configuration model;
FIG. 2 is a schematic diagram of a system architecture in which a 3GPP network interworks with a TSN network;
FIG. 3 is a schematic diagram of latency deterministic transmission based on buffering and forwarding in a downlink direction;
FIG. 4 is a schematic diagram in which a downlink TSN stream arrives at an NW-TT ingress and arrives at a RAN ingress;
FIG. 5 is a schematic diagram in which an uplink TSN stream arrives at a DS-TT ingress and is sent from UE;
FIG. 6 is a schematic diagram of a 5G QoS architecture;
FIG. 7 is a schematic diagram of a time sequence of sending a packet in a downlink direction;
FIG. 8 is a schematic diagram in which a scheduling coordinator adjusts a sending occasion of a downlink packet on a UPF or an application side;
FIG. 9 is a schematic diagram of a network architecture in which an SMF serves as a CUC;
FIG. 10 is a schematic flowchart of TSN configuration in the conventional technology;
FIG. 11 and FIG. 12 are respectively schematic diagrams of a non-roaming reference point-based 5G architecture according to an embodiment of this application;
FIG. 13 is a schematic flowchart of service flow attribute configuration according to an embodiment of this application;
FIG. 14 is a schematic flowchart of service flow attribute configuration according to another embodiment of this application;
FIG. 15 is a schematic flowchart of service flow attribute configuration in a scenario 1 according to an embodiment of this application;
FIG. 16 is a schematic flowchart of service flow attribute configuration in a scenario 2 according to an embodiment of this application;
FIG. 17 is a schematic flowchart of service flow attribute configuration in a scenario 3 according to an embodiment of this application;
FIG. 18 is a schematic flowchart of service flow attribute configuration in a scenario 4 according to an embodiment of this application;
FIG. 19 is a schematic diagram of a structure of a communication apparatus according to an embodiment of this application;
FIG. 20 is a schematic diagram of a structure of another communication apparatus according to an embodiment of this application; and
FIG. 21 is a schematic diagram of a structure of another communication apparatus according to an embodiment of this application.

### DESCRIPTION OF EMBODIMENTS

The following further describes in detail this application with reference to the accompanying drawings.

In the descriptions of this application, terms such as "first" and "second" are only for distinction and description, but cannot be understood as indicating or implying relative importance, or as indicating or implying an order. It should be noted that an appearing order of "first", "second", and the like is not limited in this application. For example, "fifth" may appear first, and then "third" may appear. This is not limited in this application.

In the descriptions of this application, "at least one (item)" means one or more (items), and "a plurality of (items)" means two or more (items).

The following first briefly describes some technical terms in embodiments of this application.

### (1) Packet data unit (packet data unit, PDU) session

The PDU session is a logical connection between user equipment (user equipment, UE, also referred to as a terminal) and a data network (data network, DN), and is configured to provide a user plane connection between the UE and the DN.

### (2) Residence time

The residence time refers to processing time or residence time, to be specific, service processing time of a device.

### (3) CN PDB

CN is short for core network. PDB is short for packet delay budget. The CN PDB represents latency between an anchor user plane function (user plane function, UPF) network element and a 5th generation mobile communication technology (5th generation mobile communication technology, 5G) access network (access network, AN) with the PDB given. The CN PDB defines an upper limit of possible latency of a data packet between the UE and an N6 endpoint at the UPF. A dynamic CN PDB can be configured in a network in two manners:

Manner 1: Configuration is performed on each NG-RAN node based on various inputs, for example, different IP addresses (es) or tunnel endpoint identifier (tunnel end identifier, TEID) ranges of UPFs that terminate N3 tunnels, and based on different combinations of a UPF of a PDU session anchor (UPF of PDU session anchor, PSA UPF) and an NG-RAN (where any potential intermediate UPF (Intermediate UPF, I-UPF) needs to be considered) and the like.

Manner 2: Configuration is performed in a session management function (session management function, SMF) network element based on different combinations of the PSA UPF and the NG-RAN (where any potential I-UPF needs to be considered).

The following describes technologies related to embodiments of this application.

### (I) TSN network architecture

Three configuration models of a TSN network are defined in IEEE 802.1cc: a fully centralized configuration model, a fully distributed configuration model, and a centralized network/distributed user configuration model.

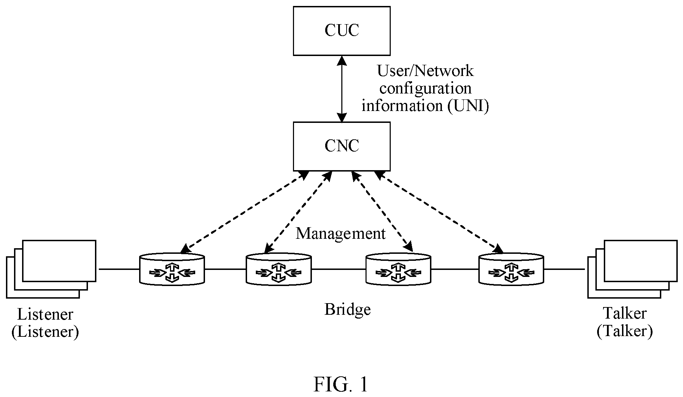

FIG. 1 shows a fully centralized configuration model. In the fully centralized configuration model, a management plane includes a centralized user configuration (centralized user configuration, CUC) network element and a centralized network configuration (centralized network configuration, CNC) network element, and a user plane includes TSN terminals and switching nodes (also referred to as bridges). The TSN terminals include talkers (referred to as Talkers) and listeners (referred to as Listeners).

The CUC network element is configured to manage the TSN terminals (Talker and Listener) and services, and is responsible for discovering and managing the TSN terminals, obtaining capabilities and user requirements of the TSN terminals, sending a TSN stream requirement to the CNC, and configuring the TSN terminals based on an indication of the CNC. The CNC network element is responsible for managing a topology (including the TSN terminals and the switching nodes) of the TSN system user plane and capability information of the switching nodes, generating an end-to-end (end-to-end, E2E) forwarding path of a TSN stream through calculation based on a TSN stream requirement, and delivering scheduling parameters to the switching nodes. The switching nodes report the capability information and topology information of the switching nodes to the CNC, and schedules and forwards data streams based on a rule delivered by the CNC.

The following describes information exchanged between a user plane network element and a management plane network element, and information exchanged between management plane network elements in the TSN network.

### 1. Information reported by a bridge (Bridge) to the CNC:

The information reported by a bridge to the CNC is bridge information reported by a 5G system bridge to the CNC, and is used by the TSN network to appropriately manage and configure the 5G system bridge. The bridge information of the 5G system bridge includes at least the following content.

### (i) Bridge information:

Bridge ID: The bridge ID is used to distinguish bridge instances. When the bridge is a 5G system, the bridge ID may be derived from a unique bridge media access control (media access control, MAC) address as described in IEEE Std 802.1Q [98], or may be set in a specific manner, to ensure that a unique value is used in the 5G system.
Port quantity.
Port number list.

### (ii) Bridge capability:

The bridge capability is a bridge delay of each port pair for each traffic category, including 5G system bridge delays, an ingress port number, an egress port, and a traffic class. Some of the 5G system bridge delays are dependent on and some are independent of sizes of frames and the delays include the following maximum and minimum values: a maximum length-dependent delay (independentDelayMax), a minimum length-independent delay (independentDelayMin), a maximum length-dependent delay (dependentDelayMax), and a minimum length-dependent delay (dependentDelayMin).

The length herein refers to the length of the frame. When the 5G system serves as the bridge, the maximum length-independent delay and the minimum length-independent delay are set based on a configuration. The 5G system sets a time range for transmission from an ingress to an egress based on a single octet of an Ethernet frame, and includes the maximum length-dependent delay and the minimum length-dependent delay for each octet of a received and stored frame.

Propagation delay (txPropagationDelay) of each port, including a transmission propagation delay and an egress port number.

Virtual local area network (virtual local area network, VLAN) configuration information.
(iii) Bridge topology defined in IEEE standard 802.1AB.
(iv) Traffic category and priority of each port defined in IEEE Std 802.1Q.
(v) Stream parameter defined in clause 12.31.1 of IEEE standard 802.1Q.

### 2. TSN user/network configuration information (user/network configuration information, UNI) exchanged between the CUC and CNC.

The TSNUNI is formed by three advanced groups:

Talker group: The talker group is sent by a talker (Talker) to the CUC to specify the talker for a single stream.
Listener group: The listener group is sent by a listener (Listener) to the CUC to specify the listener for a single stream.

Status group: The status group is sent by the CUC to a talker/listener to specify a stream network configuration status of the talker or the listener. The group notifies a user when a stream is ready for use (or when a fault occurs).

Each TSN configuration is identified by a stream identifier (StreamID).

### 2.1 Talker (Talker) group

The talker (Talker) supports the following seven configurations.
(1) StreamID (64 bits): Indicates a stream identifier, which identifies a stream (Stream) configuration, and includes two fields: MACAddress (48 bits) and UniqueID (16 bits). MACAddress is a source MAC address (optional) of a stream. UniqueID is for distinguishing different streams from a same talker.
(2) StreamRank (8 bits): Indicates a stream class, and provides a class of a stream relative to other streams in the network. The class is for determining a priority of stream resource configuration and is irrelevant to stream data. Currently, a value may be 0 or 1. The value of 0 indicates a higher priority than the value of 1 and usually indicates an emergency service. The quantity of stream classes is not limited in embodiments of this application.
(3) EndStationInterfaces (48 bits or above): Indicates an end station interface, which is also referred to as an end node interface, and used to describe interfaces corresponding to a stream (where a stream may include a plurality of interfaces), and includes two fields: MACAddress (48 bits) and an interface name (InterfaceName) (optional field).
(4) DataFrameSpecification: Indicates a data frame definition, which defines the stream data. The network uses the definition to identify a data packet of the stream and then applies a corresponding TSN configuration. The data frame definition may include one or more of the following fields.

IEEE802-MacAddresses (96 bits): Indicates a source MAC address and a destination MAC address.

IEEE802-VlanTag (24 bits): Indicates information of a C-Tag (which is an inner VLAN tag, identifying a user VLAN) of a data frame, which excludes an S-Tag (which is an outer VLAN tag, identifying a carrier VLAN). A DEI field is not used (where the DEI field and a PCP field jointly identify a priority of the S-Tag). The PCP field and a VlanID field are optionally used. When only the PCP field exists, VlanId is set to 0.

IPv4-tuple: Indicates IPv4 information of the data frame, and includes an IP 6-tuple. The 6-tuple of an IPv4 address may be shown in Table 1.

**Table 1: IPv4 address 6-tuple**

| Name | Data type | Reference |
|---|---|---|
| Source IP address | IPv4 address type (ipv4-address type) | 46.2.3.4.3 item a) |
| Destination IP address | IPv4 address type (ipv4-address type) | 46.2.3.4.3 item b) |
| Differentiated services code point (differentiated services code point, DSCP) | Unit 8 | 46.2.3.4.3 item c) |
| Protocol | Unit 16 | 46.2.3.4.3 item d) |
| Source port | Unit 16 | 46.2.3.4.3 item e) |
| Destination port | Unit 16 | 46.2.3.4.3 item f) |

It should be noted that, in this application, "reference" content in the table is related content in the protocol IEEE Std 802.1Qcc.

IPv6-tuple: Indicates IPv6 information of the data frame, and includes an IP 6-tuple. The 6-tuple of an IPv6 address may be shown in Table 2.

**Table 2: IPv6 address 6-tuple**

| Name | Data type | Reference |
|---|---|---|
| Source IP address | IPv6 address type (ipv6-address type) | 46.2.3.4.3 item a) |
| Destination IP address | IPv6 address type (ipv6-address type) | 46.2.3.4.3 item b) |
| Differentiated services code point (differentiated services code point, DSCP) | Unit 8 | 46.2.3.4.3 item c) |
| Protocol | Unit 16 | 46.2.3.4.3 item d) |
| Source port | Unit 16 | 46.2.3.4.3 item e) |
| Destination port | Unit 16 | 46.2.3.4.3 item f) |

(5) TrafficSpecification: Indicates a traffic description, which defines how the talker sends the data frame. On a network side, the traffic description is used to allocate resources of each bridge and adjust ordering parameters.

Mandatory information in TrafficSpecification may be shown in Table 3.

**Table 3: Information units of TrafficSpecification**

| Name | Data type | Reference |
|---|---|---|
| Interval | Unit 16 | 46.2.3.5.1 |
| MaxFramesPerInterval | Unit 16 | 46.2.3.5.2 |
| MaxFrameSize | Unit 16 | 46.2.3.5.3 |
| TransmissionSelection | Unit 8 | 46.2.3.5.4 |

Interval: Indicates maximum duration of a frame size (MaxFrameSize) and a quantity of frames (MaxFramesPerInterval) defined by the talker. The duration is a rational number of seconds, which is defined by an unsigned 32-bit integer numerator and an unsigned 32-bit integer denominator. In other words, the duration can be less than a second.

MaxFramesPerInterval: Indicates a maximum quantity of frames sent in a periodicity.

MaxFrameSize: Indicates a maximum length of a frame that can be sent by the talker.

TransmissionSelection: Specifies a scheduling algorithm used in a process of forwarding the stream. A default value is 0, which represents a strict priority (strict priority).

Optionally, TrafficSpecification may further include a TSpecTimeAware group, and information included in the TSpecTimeAware group may be shown in Table 4.

**Table 4: Information units of TSpecTimeAware**

| Name | Data type | Reference |
|---|---|---|
| EarliestTransmitOffset | Unit 32 | 46.2.3.5.5 |
| LatestTransmitOffset | Unit 32 | 46.2.3.5.6 |
| Jitter | Unit 32 | 46.2.3.5.7 |

EarliestTransmitOffset: Indicates an earliest transmit offset, to be specific, an earliest offset of when the talker sends the first data frame in a periodicity relative to a start time point of the periodicity. The offset is a signed integer and measured in a unit of ns.

LatestTransmitOffset: Indicates a latest transmit offset, to be specific, a latest offset of when the talker sends the first data frame in the periodicity relative to the start time point of the periodicity. The offset is a signed integer and measured in a unit of ns.

Jitter: Indicates jitter, which specifies a maximum time difference between a transmit offset of the talker and ideal synchronization network time, and is an unsigned integer and measured in a unit of ns. The jitter is for defining a time error caused by an implementation of the talker, rather than a time synchronization error.

(6) UserToNetworkRequirements (40 bits): Indicates user-to-network requirements, defines appeals of the user, such as latency and redundancy, and includes two fields: NumSeamlessTrees and MaxLatency.

NumSeamlessTrees: Indicates the quantity of redundant paths required from the network for seamless connections. A value of 0 represents one path and there is no redundancy. When the quantity of required redundant paths is greater than the quantity of paths that can be provided by the network, some redundant paths share a same path.

MaxLatency: Indicates maximum latency of a data frame from the talker to the listener, and is a signed integer and measured in a unit of ns. When a stream has a plurality of listeners, if the talker defines the value, all delays from the talker to all listeners need to meet the value. If the talker does not define the value but the listener defines the value, the value defined by the listener needs to be met.

(7) InterfaceCapabilities: Defines interface capabilities of an end node, and includes the following three fields:
VlanTagCapable: Indicates whether to support adding or deleting a VLAN tag (VLAN Tag).

CB-StreamIdenTypeList: Indicates supported stream identifier types. The types are shown in Table 5.

**Table 5: Stream identifier type**

| OUI/CID | Type number | Stream identifier function | Control parameter |
|---|---|---|---|
| 00-80-C2 | 0 | Reserved | ---- |
| 00-80-C2 | 1 | Null stream identifier (null stream identifier) (6.4) | 9.1.2 |
| 00-80-C2 | 2 | Source MAC address and VLAN stream identifier (6.5) | 9.1.3 |
| 00-80-C2 | 3 | Active destination MAC address (Active Destination MAC) and VLAN stream identifier (6.6) | 9.1.4 |
| 00-80-C2 | 4 | IP stream identifier (6.7) | 9.1.5 |
| 00-80-C2 | 5-255 | Reserved | ---- |
| Others | ---- | Defined by an entity that owns the OUI or the CID | ---- |

CB-SequenceTypeList: Indicates supported frame replication and deduplication sequence encoding and decoding types, as shown in Table 6.

**Table 6: Sequence encoding and decoding type**

| OUI/CID | Type number | Sequence encoding/decoding method |
|---|---|---|
| 00-80-C2 | 0 | Reserved |
| 00-80-C2 | 1 | R-Tag (7.8) |
| 00-80-C2 | 2 | HST sequence tag (7.9) |
| 00-80-C2 | 3 | PRP sequence tag (7.10) |
| 00-80-C2 | 4-255 | Reserved |
| Others | ---- | Defined by an entity that owns the OUI or the CID |

### 2.2 Listener (Listener) group

A listener (Listener) supports four configurations, and specific definitions of the configurations are the same as those of the talker.
(1) StreamID.
(2) EndStationInterfaces.
(3) UserToNetworkRequirements.
(4) InterfaceCapabilities.

### 2.3 Status (status)

A status configuration is sent by the network to the talker and listener, notifying a TSN configuration success or failure. In the fully distributed configuration model and the centralized network/distributed user configuration model, the CNC sends the status to the talker and the listener. In the fully centralized configuration model, the CNC sends the status to the CUC, and further, the CUC sends the status to the talker and the listener.

The status includes the following five configurations:
(1) StreamID: Indicates the stream identifier, whose definition is the same as that of the talker.
(2) StatusInfo: Indicates the configuration status of the TSN stream (TSN Stream), and includes the following three fields:

TalkerStatus field: Indicates the status of a network configuration of the talker, and may include information shown in Table 7.

**Table 7: TalkerStatus information**

| Name | Value | Description |
|---|---|---|
| None | 0 | No talker is detected. |
| Ready (ready) | 1 | The talker is ready (configured). |
| Failed (failed) | 2 | The talker fails to be configured. |

ListenerStatus field: Indicates the status of a network configuration of the listener, and may include information shown in Table 8.

**Table 8: ListenerStatus information**

| Name | Value | Description |
|---|---|---|
| None | 0 | No listener is detected. |
| Ready (ready) | 1 | All listeners are ready (configured). |
| PartialFailed | 2 | One or more listeners are ready, and one or more listeners fail to be configured. If the listeners are ready, the stream can be used. |
| Failed (failed) | 3 | All listeners fail to be configured. |

FailureCode field: Indicates a failure code.
(3) AccumulatedLatency: Indicates accumulated latency, which refers to possible maximum latency of a currently planned transmission path and is a signed integer and measured in a unit of ns.
(4) Interface Configuration: Indicates an interface configuration, which refers to an interface configuration of the talker and the listener. The configuration meets a requirement of the stream and an interface capability. The following configurations are included:

IEEE802-MacAddresses: Same as the configuration of the talker.

IEEE802-VlanTag: Same as the configuration of the talker.

IPv4-tuple: Same as the configuration of the talker.

IPv6-tuple: Same as the configuration of the talker.

TimeAwareOffset: Defines an offset (time offset) used by the talker to transmit a data packet. The offset is between EarliestTransmitOffset and LatestTransmitOffset. In other words, the offset is packet sending time of the talker.

(5) FailedInterfaces: Indicates a list of interfaces that fail to be configured. A definition is the same as that of EndStationInterfaces.

### (II) Interworking between a 3GPP network and a TSN network

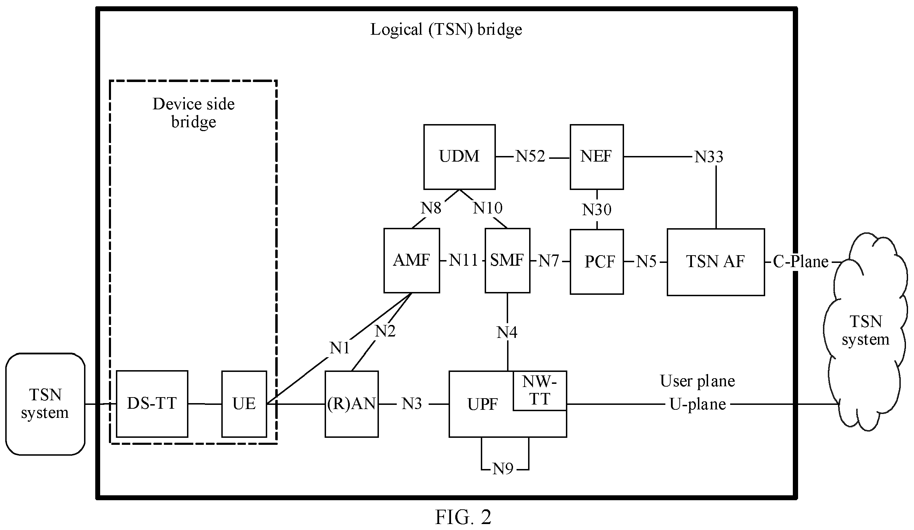

FIG. 2 is a diagram of a system architecture in which a 3GPP network interworks with a TSN network according to an embodiment of this application. The entirety of a 3GPP 5G system and TSN translators (TSN Translators) serves as a logical TSN bridge (TSN Bridge). The 5G system exchanges information with nodes in the TSN network by using a control plane TSN translator (namely, an application function (application function, AF) network element). The exchanged information includes bridge capability information of the 5G system, TSN configuration information, time scheduling information of a TSN input/output port, time synchronization information, and the like. A TSN Translator (device side TSC Translator, DS-TT for short, where TSC is short for time sensitive communication, that is, time sensitive communication) on a UE side may be located inside the UE, or may be located outside the UE. A TSN Translator (network side TSC Translator, NW-TT for short) on a UPF side is located inside the UPF.

The entire 5G system serves as a TSN bridge. A CNC configures a sending time window and a stream periodicity for each TSN bridge based on information reported by a 5GS bridge and other bridges to ensure an end-to-end (from a TSN Talker to a TSN Listener) deterministic delay.

A downlink is used as an example. In a process in which the user plane processes a packet, after the packet is transmitted from the TSN system to the NW-TT, the NW-TT sends the packet to the DS-TT, and the DS-TT sends the packet within preconfigured time based on the sending time window (namely, a gating control scheduling parameter) configured by the CNC. To ensure that the packet can be sent in a timely manner, the packet needs to arrive at the DS-TT before preset sending time, and is buffered in the DS-TT until the sending time window.

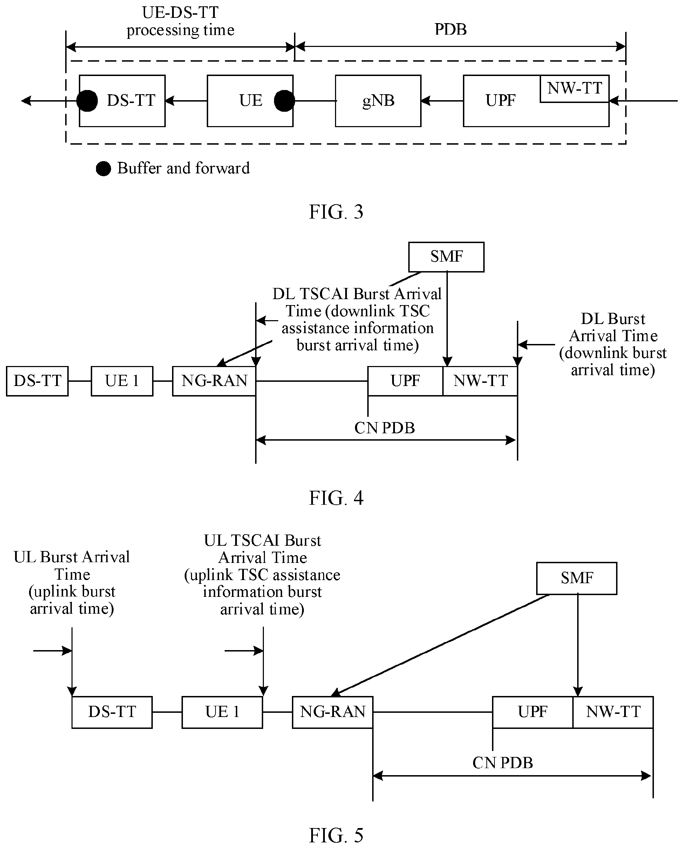

Refer FIG. 3. For a specific packet having a deterministic delay requirement, a 5G system needs to determine a corresponding PDB based on the packet requirement, and ensure that transmission time of the packet between UE and the UPF is not greater than the PDB. In other words, the packet arrives at the DS-TT in advance, so that the packet can catch up with the sending time window configured by the CNC.

3GPP network and TSN interconnect by using a black-box model. The CNC configures time for arriving at a 5G core network and time for leaving the 5G core network based on a stream granularity. Uncertainty caused by air interface transmission and wired transmission between the UE and the UPF is eliminated by buffering a data packet at an endpoint TSC Translator.

The TSN AF determines, based on scheduling information of the TSN stream obtained from the CNC, time when the TSN stream arrives at an ingress of the 5G system, to be specific, time when the TSN stream arrives at an ingress of the NW-TT in a downlink direction, for example, DL burst arrival time (downlink burst arrival time) in FIG. 4, and time when the TSN stream arrives at an ingress of the DS-TT in an uplink direction, for example, UL burst arrival time (uplink burst arrival time) in FIG. 5. The TSN AF provides the information to a session management function (Session Management Function, SMF) network element via a policy control function (policy control function, PCF) network element. Based on the information, the SMF further calculates time when the TSN stream arrives at the NG-RAN (DL TSCAI Burst Arrival Time in FIG. 4) in the downlink direction and time when the TSN stream is sent from the UE (UL TSCAI Burst Arrival Time in FIG. 5) in the uplink direction. The time is provided as TSC assistance information (TSC assistance information, TSCAI) for a radio access network (Radio Access Network, RAN) to refer, so that a RAN node reserves resources in advance.

The foregoing TSCAI may also be replaced with a TSC assistance container (TSC assistance container, TSCAC), and the TSCAC may be sent by the AF or a TSCTSF to the SMF (optionally, via the PCF).

The TSCAI includes the following information:
Flow direction: Indicates whether the TSC stream is in the uplink direction or in the downlink direction.

Periodicity: Indicates an interval between start time of two bursts (bursts).

Burst arrival time (burst arrival time, BAT): In the downlink direction, the BAT refers to time when a burst arrives at an ingress of the RAN node. In the uplink direction, the BAT refers to time when the burst arrives at an egress of the UE.

Optionally, the TSCAI may also include other information. This is not limited in embodiments of this application.

The TSCAC includes the following information:
Flow direction: Indicates whether the TSC stream is in the uplink direction or in the downlink direction.

Periodicity: Indicates an interval between start time of two bursts (bursts).

Burst arrival time (burst arrival time, BAT): Indicates time when the first data packet of a data burst arrives at the ingress port (the DS-TT in the uplink direction, and the NW-TT in the downlink direction) of the 5GS in a given direction.

Optionally, the TSCAC may also include other information.

A method for the SMF to determine the downlink TSCAI burst arrival time is:
TSCAI Burst Arrival Time = TSCAC DL Burst Arrival Time + DL CN PDB.

A method for the SMF to determine the uplink TSCAI burst arrival time is:
TSCAI Burst Arrival Time = TSCAC UL Burst Arrival Time + UE-DS-TT Residence Time.

The SMF binds a service (a data flow) to a quality of service (quality of service, QoS) flow. In other words, there is a correspondence between the QoS flow (QoS Flow) and the service flow. For a time sensitive service, it is generally considered that QoS flows are in a one-to-one correspondence with service flows.

### (IV) 5G QoS architecture

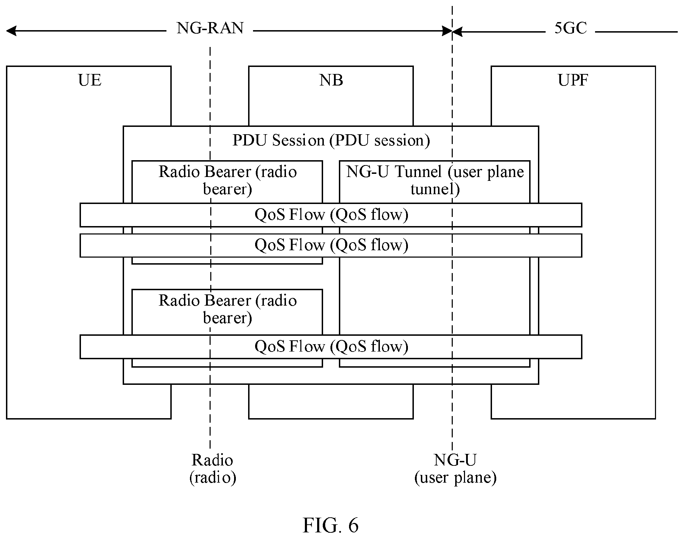

In the 5G system, to ensure end-to-end quality of service of the service, a QoS flow-based 5G QoS model is proposed, as shown in FIG. 6. The 5G QoS model supports a QoS flow with a guaranteed bit rate (GBR QoS flow, where GBR is short for guaranteed bit rate, that is, guaranteed bit rate) and a QoS flow (Non-GBR QoS Flow) with a non-guaranteed bit rate. Same transmission processing (such as scheduling or an admission threshold) is performed on data packets controlled by using a same QoS flow.

UE may establish one or more PDU sessions with a 5G network. One or more QoS flows can be established in each PDU session. Each QoS flow is identified by a QFI (QoS Flow Identifier, QoS flow identifier). The QFI uniquely identifies the QoS flow in the session.

Each QoS flow has its own characteristic information. The SMF sends a QoS file to the RAN. The QoS file includes a 5G QoS identifier 5QI (where the 5QI is an index of QoS characteristics). The QoS characteristics include the PDB.

The PDB defines an upper limit of possible latency of a data packet between the UE and an N6 endpoint at the UPF. A 5G access network (AN) packet delay budget (5G-AN PDB) is determined by subtracting a value of a core network packet delay budget (CN PDB). The CN PDB represents a delay between any N6 endpoint at the UPF (for any UPF that may be selected for a PDU session) and a 5G-AN from a given PDB.

### (IV) Coordinated scheduling optimization technology

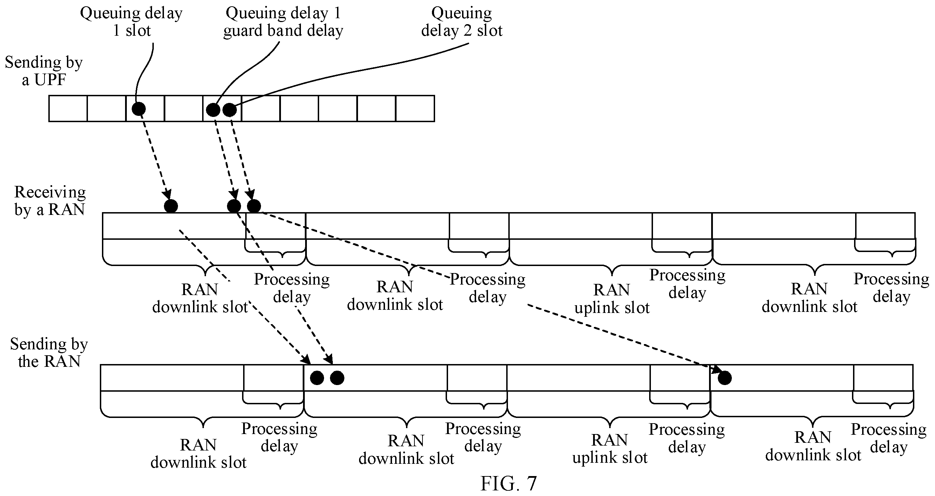

Currently, 3GPP network and TSN (or a non-TSN time sensitive network) interconnect by using the black-box model. It is assumed that packet transmission between the RAN node and the UPF definitely does not exceed the CN PDB. However, if RAN scheduling particularity (such as TTI scheduling guard and uplink-downlink configuration) is not considered, an extra buffering/queuing delay is introduced to the RAN in the downlink direction. Similarly, in the uplink direction, data packets are buffered or queued in the UE. The downlink is herein used only as an example. FIG. 7 is a schematic diagram of a time sequence of sending a packet in a downlink direction.

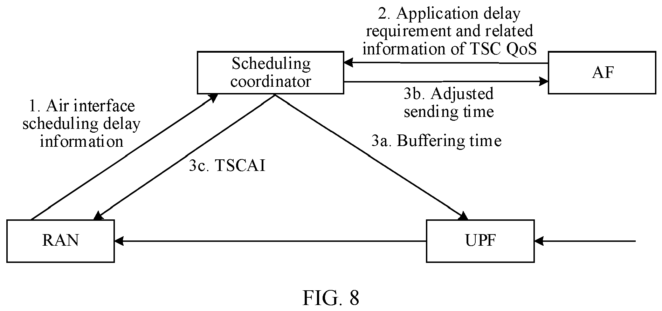

As shown in FIG. 7, in the downlink direction, if a packet sent by a UPF arrives at a RAN at different occasions, duration of buffering/queuing on the RAN to wait for scheduling is also different. The smallest duration is a processing delay (TTI scheduling guard band duration), and the largest duration may exceed two slots (Slots). Typical duration of a slot on the RAN is 125 µs. For a service that requires an ultra-low delay (for example, cycle time of 1 to 2 ms), an excessively high queuing delay on the RAN node needs to be avoided. Therefore, coordination needs to be performed on the RAN node, the UPF, and an application server (Application Server) to avoid the queuing delay of the node. As shown in FIG. 8, a current solution is as follows:
1. A scheduling coordinator (for example, a RAN or an SMF) obtains air interface scheduling delay information, which may specifically include: TTI start time, slot duration, uplink-downlink slot configuration information, TTI guard duration of a RAN node, and a CN PDB.
2. The scheduling coordinator obtains an application delay requirement and related information of TSC QoS, including burst arrival time and a service periodicity.
3. The scheduling coordinator adjusts, based on the obtained air interface scheduling delay information and the service delay requirement, a sending occasion of a downlink packet on a UPF or an application side, so that a service having an ultra-low delay or jitter requirement can be scheduled in a timely manner on an air interface (refer to 3a, 3b, and 3c in FIG. 8). For example, in 3b in FIG. 8, the scheduling coordinator sends information to an AF to indicate to adjust a sending occasion of a packet on the application side.

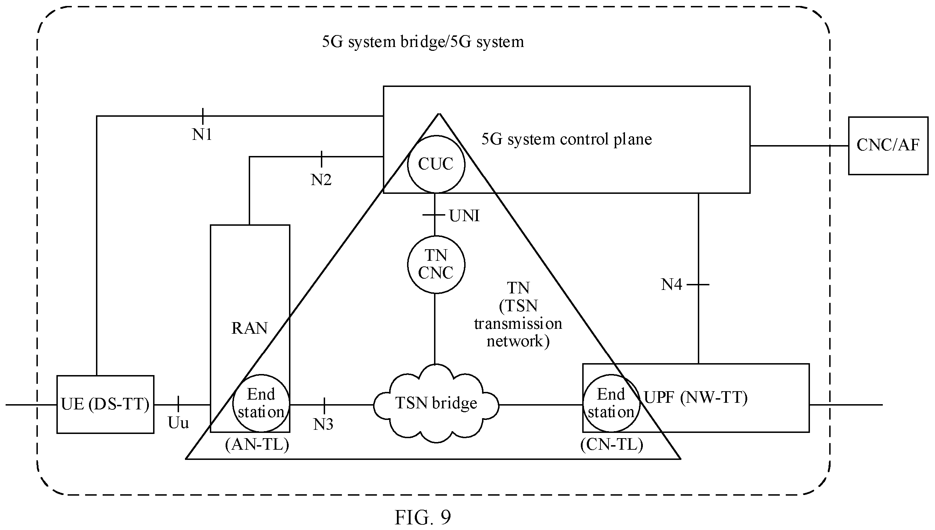

Refer to FIG. 9. A 5G control plane network element, for example, an SMF, may serve as a CUC (where the SMF serving as the CUC may be represented by SMF/CUC). The SMF/CUC provides the foregoing talker/listener group information to a TN CNC through a user/network interface. The TNC-CN uses the talker/listener group information as an input to configure a bridge (Bridge) in a transmission network and provides a status (status) to the SMF/CUC. The SMF/CUC may also adjust sending time of a flow in a UPF and a RAN. The TN CNC refers to the CNC in the transmission network. The transmission network is located between the RAN and the UPF, and a service flow transmitted by the transmission network is a service flow in a 5G network. The RAN and the UPF respectively serve as end stations (End Station), namely, a talker and a listener. In an uplink direction, the RAN serves as the talker, and the UPF serves as the listener. In a downlink direction, the UPF serves as the talker, and the RAN serves as the listener.

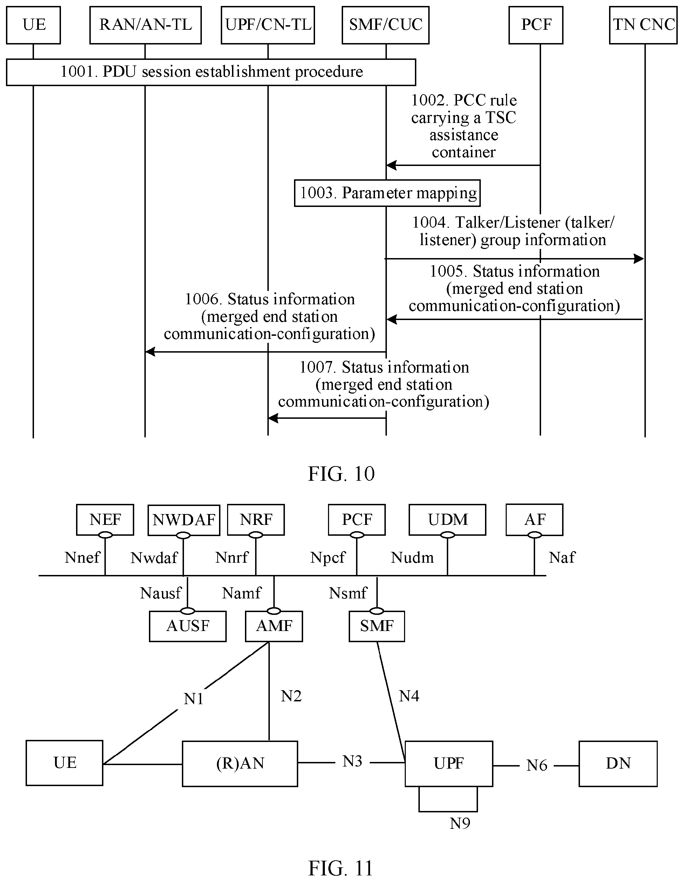

FIG. 10 shows a currently used TSN configuration procedure by using an example in which an SMF serves as a CUC. As shown in the figure, the procedure includes the following steps.

Step 1001: UE triggers a PDU session establishment procedure.

For the PDU session establishment procedure, refer to content of clause 4.3.2 in TS 23.502.

If a RAN and a UPF support a TL (Talker/Listener) function, the RAN and the UPF can report interface capability (Interface Capabilities) information to the SMF. For example, a transparent container may be used for reporting. The transparent container may represent that network elements such as the RAN, the UPF, and the SMF may not need to understand content of the transparent container, and the content is processed by a talker/listener or the CUC.

Step 1002: A PCF sends, to the SMF, a policy and charging control (policy and charging control, PCC) rule carrying a TSC assistance container (TSCAC). The TSC assistance container may represent that network elements such as the RAN, the UPF, and the SMF may not need to understand content of the TSC assistance container, and the content is processed by the talker/listener or the CUC. The TSC assistance container includes a burst (burst) size of TSC traffic.

The SMF establishes a QoS flow according to the PCC rule, and sends information corresponding to the QoS flow to the RAN and the UPF (where this process is not shown in the figure).

Step 1003: The SMF performs parameter mapping to obtain talker/listener group information. The parameter mapping refers to determining talker/listener group information based on information reported by the talker and information reported by the listener. The talker/listener group information may also be referred to as merged stream requirements (merged stream requirements).

Step 1004: The SMF sends the talker/listener group information (or referred to as the merged stream requirements) to the TN CNC.

Step 1005: The TN CNC returns status (status) information to the SMF. The status (status) information is also referred to as a merged end station communication-configuration (merged end station communication-configuration).

Step 1006 and step 1007: The SMF configures the talker and the listener based on the status (status) information returned by the TN CNC.

When a coordinated scheduling optimization technology occurs, TSCAI (specifically, burst arrival time BAT) of a service flow changes. If negotiation occurs, the TSCAI changes more frequently. When a parameter (for example, a transmit offset TransmitOffset) related to a transmission network service is calculated based on the BAT in the TSCAI (or a TSCAC), frequent updates occur. Consequently, the TN CNC is frequently reconfigured, thereby causing system instability.

Therefore, embodiments of this application provide a method for configuring a service attribute, an apparatus, and a system, to avoid a problem that a service flow attribute frequently changes due to a change of burst arrival time (burst arrival time).

Embodiments of this application provide a method for configuring a service attribute, an apparatus, and a system. The method, the apparatus, and the system in this application are based on a same technical concept. Because problem-resolving principles of the method, the apparatus, and the system are similar, mutual reference may be made to implementations of the apparatus, the system and the method. Repeated parts are not described.

The following describes embodiments of this application with reference to the accompanying drawings.

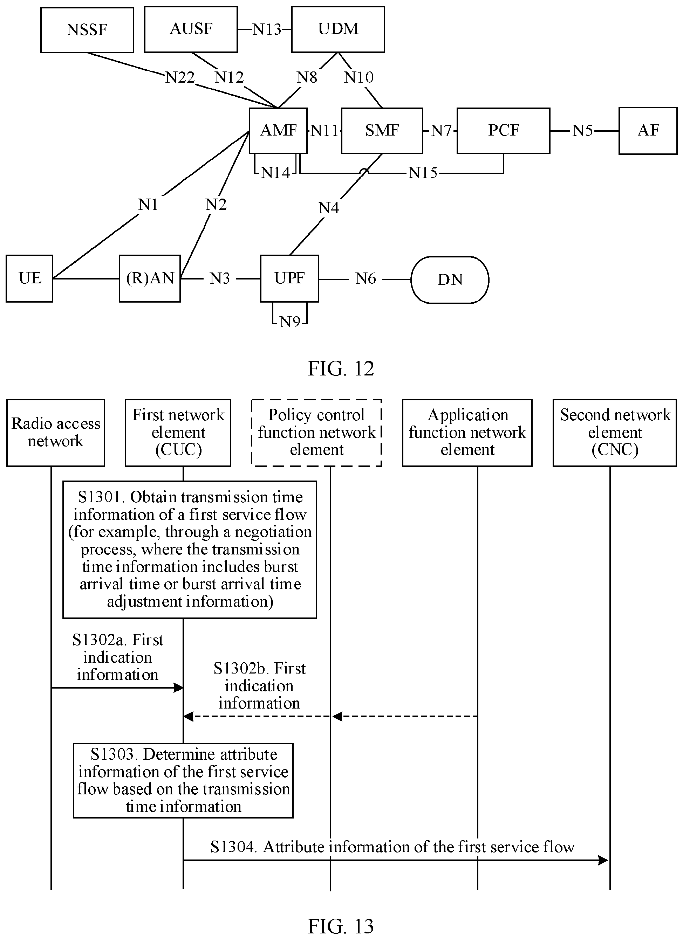

FIG. 11 and FIG. 12 show a non-roaming reference point-based 5G architecture according to an embodiment of this application. The 5G system architecture is divided into two parts: an access network and a core network. The access network is configured to implement a function related to radio access. The core network mainly includes the following crucial network elements: an access and mobility management network element (access and mobility management function, AMF), a session management network element (session management function, SMF), a user plane network element (user plane function, UPF), a policy control network element (policy control function, PCF), a unified data management network element (unified data management, UDM), and the like.

Based on the foregoing service-based 5G system architecture and the foregoing non-roaming reference point-based architecture, functions of network elements related to this application are as follows:
Terminal device: The terminal device may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and an access network device communicate with each other by using an air interface technology.

(R)AN device: The (R)AN device is a device that provides access for the terminal device, and includes a RAN device and an AN device. The RAN device is mainly a wireless network device in a 3GPP network, and the AN device may be an access network device defined in non-3GPP. Radio access network (Radio Access Network, RAN) device: The radio access network device is mainly responsible for functions such as radio resource management, quality of service (quality of service, QoS) management, and data compression and encryption on an air interface side. The RAN device may include base stations in various forms, for example, a macro base station, a micro base station (also referred to as a small cell), a relay station, and an access point. In systems that use different radio access technologies, names of a device that has a base station function may be different. For example, the device is referred to as a RAN or a gNB (5G NodeB) in a 5th generation (5th generation, 5G) system, referred to as an evolved NodeB (evolved NodeB, eNB or eNodeB) in an LTE system, and referred to as a NodeB (NodeB) in a 3rd generation (3rd generation, 3G) system.

Access network (access network) device: The network element allows interconnection and interworking between the terminal device and the 3GPP core network by using a non-3GPP technology, where the non-3GPP technology is, for example, wireless fidelity (Wireless Fidelity, Wi-Fi), worldwide interoperability for microwave access (Worldwide Interoperability for Microwave Access, WiMAX), or code division multiple access (code division multiple access, CDMA) network.

AMF network element: The AMF network element is mainly responsible for mobility management in a mobile network, such as user location update, registration of a user with a network, and user switching.

SMF network element: The SMF network element is mainly responsible for session management in the mobile network, such as session establishment, modification, and release. For example, specific functions are assigning an IP address to a user, selecting a UPF that provides a message forwarding function, and the like.

UPF network element: The UPF network element is responsible for forwarding and receiving user data in the terminal device. The UPF network element may receive user data from a data network, and transmit the user data to the terminal device via the access network device. The UPF network element may further receive user data from the terminal device via the access network device, and forward the user data to the data network. A transmission resource and a scheduling function that are used by the UPF network element to serve the terminal device are managed and controlled by the SMF network element.

PCF network element: The PCF network element mainly supports providing a unified policy framework to control network behavior, and providing a policy rule for a control layer network function, and is responsible for obtaining policy decision-related subscription information of a subscriber.

Network exposure function (network exposure function, NEF) network element: The network exposure function network element is mainly configured to support exposure of capabilities and events.

Application function (application function, AF) network element: The application function network element mainly supports interacting with the 3GPP core network to provide a service, for example, to affect a data routing decision, provide a policy control function, or provide some third-party services for a network side. If the AF and the 5G system are located in different trusted domains, an input may be provided through a network exposure function (NEF) application programming interface (API). If the AF and the 5G system are located in a same trusted domain, the input may be provided directly via a time sensitive communication time synchronization function (Time Sensitive communication Time Synchronization function, TSCTSF). In 5G, the application function network element may be an AF network element, for example, as shown in FIG. 11 or FIG. 12. In a future communication such as 6G, the application function network element may still be an AF network element, or may have another name. This is not limited in this application.

UDM network element: The UDM network element is configured to generate an authentication credential, process a subscriber identifier (for example, store and manage a subscription permanent identifier), control access authorization, manage subscription data, and the like.

Data network (data network, DN): The data network refers to a service network that provides data transmission services for the user, such as an IP multimedia service (IP multimedia service, IMS) and internet (Internet).

The UE accesses the DN by using a PDU session established between the UE and the DN.

Based on the foregoing architecture, the 5G system may determine TSCAI/a TSCAC based on information provided by the AF/NEF, and may provide the TSCAI/TSCAC to the PCF for IP type and Ethernet type PDU sessions. The AF may provide the NEF with traffic pattern parameters, such as burst arrival time, a periodicity, a flow direction, survival time, and time domain of a reference ingress port. The NEF may forward the received traffic pattern parameters to the TSCTSF. An AF trusted by a carrier may be allowed to directly provide these traffic mode parameters to the TSCTSF. The TSCTSF may be responsible for determining these service mode parameters in the TSCAI/TSCAC and forwarding the service mode parameters to the SMF (which may be via the PCF).

In the foregoing architecture, each network element in the core network may also be referred to as a functional entity, a device, or a network function, and may be a network element implemented on dedicated hardware, or may be a software instance run on the dedicated hardware, or an instance of a virtualization function on an appropriate platform. For example, the foregoing virtualization platform may be a cloud platform.

In this application, a network element may also be referred to as a network function, a function, an entity, or the like. This is not limited in this application.

It should be noted that the communication system architecture shown in FIG. 11 or FIG. 12 is not limited to including only the network elements shown in the figure, and may further include another device not shown in the figure. Details are not described herein in this application one by one.

It should be noted that a distribution form of the network elements is not limited in embodiments of this application. The distribution form shown in FIG. 1 is merely an example, and is not limited in this application.

For ease of description, subsequently the network elements shown in FIG. 1 are used as examples for description in this application, and an XX network element is directly referred to as an XX. It should be understood that names of all network elements in this application are merely used as examples, and may also be referred to as other names in future communication. Alternatively, the network element in this application may be replaced by another entity or device that has a same function in the future communication. This is not limited in this application. Unified descriptions are provided herein, and details are not described subsequently again.

It should be noted that the communication system shown in FIG. 11 and FIG. 12 does not constitute a limitation on a communication system to which embodiments of this application are applicable. The communication system architecture shown in FIG. 11 and FIG. 12 is a 5G system architecture. Optionally, the method in embodiments of this application is further applicable to various future communication systems, such as 6G or another communication network.

A method for configuring a service flow attribute provided in an embodiment of this application is applicable to the communication system shown in FIG. 11 or FIG. 12. FIG. 13 is a schematic flowchart of a method for configuring a service flow attribute according to an embodiment of this application. The procedure may occur when coordinated scheduling optimization needs to be performed. A first network element in the procedure is a CUC network element. Optionally, an SMF may serve as the CUC (namely, a TN CNC), and a second network element is a CNC. Optionally, an AF may serve as the CNC. The first network element may adjust burst arrival time (BAT) through a negotiation process, end the negotiation process after receiving first indication information from the application function (AF) or a radio access network (RAN), and determine attribute information of a first service flow by using adjusted burst arrival time.

The first service flow may correspond to one QoS flow, or may correspond to a plurality of QoS flows. This is not limited in this embodiment of this application.

As shown in FIG. 13, a specific procedure of the method may include the following steps.

S1301: The first network element obtains transmission time information of the first service flow. The transmission time information includes the burst arrival time or burst arrival time adjustment information, and the burst arrival time adjustment information is for determining the adjusted burst arrival time.

In this embodiment of this application, the burst arrival time of the first service flow may include at least one of the following:
downlink TSCAI burst arrival time, to be specific, time when a burst (burst) arrives at an ingress of the radio access network (for example, DL TSCAI Burst Arrival Time in FIG. 4, to be specific, time when the burst (burst) of the first service flow arrives at the NG-RAN);
uplink TSCAI burst arrival time, to be specific, time when the burst (burst) arrives at a terminal (for example, UL TSCAI Burst Arrival Time in FIG. 5, to be specific, time when the burst (burst) of the first service flow arrives at UE);
downlink TSCAC burst arrival time, for example, time when the burst (burst) arrives at an NW-TT on a UPF side; or
uplink TSCAC burst arrival time, for example, time when the burst (burst) arrives at a DS-TT on a UE side.

Optionally, the first network element may obtain the DL TSCAI burst arrival time through calculation based on DL burst arrival time provided by the AF and a DL CN PDB, and obtain the UL TSCAI burst arrival time based on UL burst arrival time provided by the AF and UE-DS-TT residence time. For a specific calculation method, refer to the foregoing related content.

Optionally, the burst arrival time adjustment information is the adjusted burst arrival time, or an offset between the burst arrival time and the adjusted burst arrival time.

In some embodiments, the burst arrival time adjustment information may be from the radio access network (RAN). For example, after sending TSCAI/a TSCAC (including the BAT) to the radio access network, the first network element receives the BAT adjustment information sent by the radio access network.

In some other embodiments, the burst arrival time or the burst arrival time adjustment information may be from a policy control function (PCF). For example, after sending the TSCAI/TSCAC (including the BAT) to the radio access network, the first network element receives the BAT adjustment information sent by the radio access network. Then, the first network element sends the BAT adjustment information (or the adjusted BAT) to the PCF. The PCF sends the BAT adjustment information to the AF. After performing adjustment again, the AF sends the BAT adjustment information to the PCF, and the PCF sends the adjustment information to the first network element. The foregoing process may be referred to as a round of negotiation process. The foregoing process may be performed for a plurality of times. In other words, the BAT adjustment information obtained by the first network element may be obtained through one or more rounds of negotiation.

In some other embodiments, the burst arrival time adjustment information may be from a time sensitive communication time synchronization function (TSCTSF), or may be directly from the AF. This is not limited in this embodiment of this application.

S1302a and S1302b: The first network element receives the first indication information.

Optionally, the first indication information may be an acknowledgment indication. Optionally, a meaning of the first indication information may be expressed as follows.
(1) The first indication information is for acknowledging the transmission time information, so that the first network element determines a service flow attribute based on the acknowledged transmission time information.

The transmission time information may be from the PCF, or may be from the RAN or another network element.

An example in which the transmission time information is from the PCF is used. For example, if the PCF sends both the BAT and the first indication information to the first network element, the first indication information indicates to acknowledge the BAT, so that the first network element determines the service flow attribute based on the BAT. For another example, if the PCF sends both the BAT offset and the first indication information to the first network element, the first indication information indicates to acknowledge the BAT offset, or rather acknowledge BAT adjusted based on the BAT offset, so that the first network element determines the service flow attribute based on the BAT offset (or the BAT adjusted based on the BAT offset). For another example, if the PCF sends only the first indication information to the first network element, the first indication information indicates to acknowledge current BAT on the first network element (or BAT previously sent by the first network element to the PCF), so that the first network element determines the service flow attribute based on the acknowledged BAT.

Another example in which the transmission time information is from the RAN is used. For example, if the RAN accepts the BAT after receiving the BAT from the first network element, the RAN may send only the first indication information to the first network element, where the first indication information indicates that the RAN accepts the BAT, so that the first network element determines the attribute information of the service flow based on the BAT. For another example, after the RAN receives the BAT from the first network element, if the RAN adjusts the BAT, and sends the BAT offset and the first indication information to the first network element, where the first indication information indicates that the RAN accepts the BAT offset (or the BAT adjusted based on the offset), the first network element determines the attribute information of the service flow based on the BAT offset (or the BAT adjusted based on the BAT offset).

(2) The first indication information is for acknowledging that data transmission is performed based on the transmission time information obtained by the first network element.

For example, the first indication information is for acknowledging that data transmission is performed based on the burst arrival time received by the first network element, for example, acknowledging that data transmission is performed based on the BAT received from the PCF.

For example, the first indication information is for acknowledging that data transmission is performed based on the adjusted burst arrival time or the burst arrival time adjustment information.

(3) The first indication information indicates that the burst arrival time is not (further) adjusted due to cross-layer scheduling optimization.

It may be understood that, based on the first indication information, the first network element may acknowledge that the attribute information of the first service flow is determined based on the foregoing transmission time information.

In a possible implementation, the first indication information may be from the policy control function (PCF), as shown in S1302a in the figure. Alternatively, the first indication information may be from the radio access network (RAN), as shown in S1302b in the figure.

For example, after sending the TSCAI/TSCAC (including the BAT) to the radio access network, the first network element receives the BAT adjustment information sent by the radio access network. Then, the first network element sends the BAT adjustment information (or the adjusted BAT) to the PCF. The PCF sends the BAT adjustment information to the AF. After performing adjustment again, the AF sends BAT adjustment information and the first indication information to the PCF (optionally, via a NEF and the TSCTSF), and the PCF sends the BAT adjustment information and the first indication information to the first network element. It should be noted that the foregoing negotiation process may be performed for a plurality of times. Only in a last negotiation process, the AF sends the first indication information to the PCF, and the PCF sends the first indication information to the first network element. In a previous negotiation process, information sent by the AF/PCF to the first network element does not include the first indication information.

In another case, in the foregoing interaction process, after receiving the TSCAI/TSCAC (including the BAT) sent by the first network element, the RAN may send the BAT adjustment information and the first indication information to the first network element. In another case, in the foregoing interaction process, after receiving the TSCAI/TSCAC (including the BAT) sent by the first network element, the RAN may alternatively send the first indication information to the first network element, to acknowledge the BAT, so that the first network element may determine the attribute information of the first service flow based on the BAT.

Optionally, the foregoing negotiation process may be terminated based on the first indication information. For example, after the AF obtains one or more pieces of BAT adjustment information from the first network element, if the AF determines that one piece of the BAT adjustment information may be used, the AF determines that negotiation does not need to be performed again, and therefore sends the first indication information to the first network element.

For example, the first indication information is sent in the last round of negotiation process. Optionally, the last round of negotiation in the foregoing N rounds of negotiation processes may include the following steps:
(i) The first network element sends the TSCAI (including the BAT) to the RAN.
(ii) The RAN adjusts the BAT to obtain BAT adjustment information 1, and sends the BAT adjustment information 1 to the first network element.
(iii) After receiving the BAT adjustment information 1, the first network element sends the BAT adjustment information 1 to the AF.
(iv) The AF sends the first indication information to the first network element, so that the first network element determines the attribute information of the first service flow based on the first indication information by using the foregoing BAT adjustment information 1 or BAT adjusted based on the BAT adjustment information 1.

In another possible scenario, the AF may alternatively send the first indication information and BAT adjustment information 2 to the first network element, so that the first network element determines the attribute information of the first service flow based on the BAT adjustment information 2 or BAT adjusted based on the BAT adjustment information 2.

Another example in which the first indication information is sent in the last round of negotiation process is used. The last round of negotiation in the foregoing N rounds of negotiation process may include the following steps:
(i) The first network element sends the TSCAI (including the BAT) to the RAN.
(ii) The RAN sends the first indication information to the first network element, so that the first network element determines the attribute information of the first service flow based on the BAT.

In another possible scenario, the RAN adjusts the BAT to obtain BAT adjustment information 3, and sends BAT adjustment information 3 and the first indication information to the first network element, so that the first network element determines the attribute information of the first service flow based on the BAT adjustment information 3 or BAT adjusted based on the BAT adjustment information 3.

S1303: After receiving the first indication information, the first network element determines the attribute information of the first service flow based on the foregoing transmission time information.

Optionally, if the transmission time information acknowledged based on the first indication information is the burst arrival time received by the first network element, the first network element determines the attribute information of the first service flow based on the burst arrival time. If the transmission time information acknowledged based on the first indication information is the burst arrival time adjustment information, the first network element determines the attribute information of the first service flow based on the burst arrival time adjustment information.

Optionally, the attribute information of the first service flow may be some parameters in the foregoing talker/listener group information. Optionally, the attribute information that is of the first service flow and that is determined by the first network element based on the adjusted burst arrival time includes at least one of the following: an earliest transmit offset (EarliestTransmitOffset), a latest transmit offset (LatestTransmitOffset), maximum latency (MaxLatency), or sending time (TimeAwareOffset). Further, an interval (interval), jitter (Jitter), and the like may be further included. For definitions of these parameters, refer to the foregoing descriptions.

The following uses an example in which the SMF serves as the CUC to describe how the SMF determines the talker/listener group information with reference to a 5G system bridge and 5G QoS parameters. The following merely lists several parameters related to this application as an example. Parameters included in the talker/listener group information are not limited thereto.

Interval (interval): The SMF can generate this parameter based on a traffic periodicity indicated in the TSCAI.

TSpecTimeAware group:
EarliestTransmitOffset: Indicates an earliest offset within the interval.

For an uplink, the earliest transmit offset should be set based on the UL BAT in the TSCAI, plus a sum of UE-DS-TT residence time and a 5G-AN PDB. In addition, considering interval information, the following formula may be used: The earliest transmit offset may be set to: UL BAT + 5G-AN PDB - M x interval. M is an integer, and may use a maximum value that can ensure that the formula "UL BAT + 5G-AN PDB > M*interval duration" is true.

For a downlink, the earliest transmit offset should be set based on a sum of the DL BAT in the TSCAC, UPF residence time, and an interval by using the following formula: DL BAT + UPF residence time - M x interval. M is an integer, and may use a maximum value that can ensure that the formula "DL BAT + UPF residence time > M * interval duration * interval duration" is true.

LatestTransmitOffset: For a last opportunity in the interval, enough time should be spared to transmit a data packet of MaxFrameSize. Therefore, the SMF may generate the latest transmit offset by using EarliestTransmitOffset plus the interval minus a sum of the jitter and time for transmitting the data packet of MaxFrameSize.

Jitter: The SMF can generate this parameter based on a local configuration.

UserToNetworkRequirements:
MaxLatency: The SMF can generate this parameter based on a CN PDB and the UPF residence time. To be specific, this parameter should be the CN PDB minus the UPF residence time.

It should be noted that the UPF residence time in the foregoing formula is an optional parameter.

S1304: The first network element sends the attribute information of the first service flow to a second network element.

Optionally, the first network element may send the attribute information of the first service flow to the second network element by sending the talker/listener group information to the second network element.

After receiving the attribute information of the first service flow, the second network element may determine and generate an E2E forwarding path of the service flow based on the information, and send scheduling parameters to switching nodes; and may further generate status (status) information based on the attribute information of the first service flow, and send the status information to the first network element, so that the first network element sends the status information to a talker and a listener (for example, in a fully centralized configuration model) of the first service flow. In this way, the talker and the listener of the first service flow are configured. In another possible implementation, the second network element may alternatively directly send the status information to the talker and the listener (for example, in a fully distributed configuration model, or in a centralized network/distributed user configuration model) of the first service flow.

In a possible implementation, in the foregoing procedure, the first network element may further receive second indication information from the policy control function network element. The second indication information is sent by an application or the application function network element to the policy control function network element or the TSCTSF, and then is sent by the policy control function network element or the TSCTSF to the first network element. The second indication information may indicate that the application function or the application supports adjusting packet sending time or the burst arrival time. Based on the second indication information, the first network element does not immediately determine the attribute information of the first service flow based on the burst arrival time. Based on the second indication information, the first network element may further obtain arrival time adjustment information of the first service flow (for example, through negotiation), and calculate the attribute information of the first service flow after receiving the first indication information. The second indication information may also be referred to as "an indication of supporting adjusting the packet sending time" or "an indication of supporting adjusting the burst arrival time". This is not limited in this embodiment of this application.

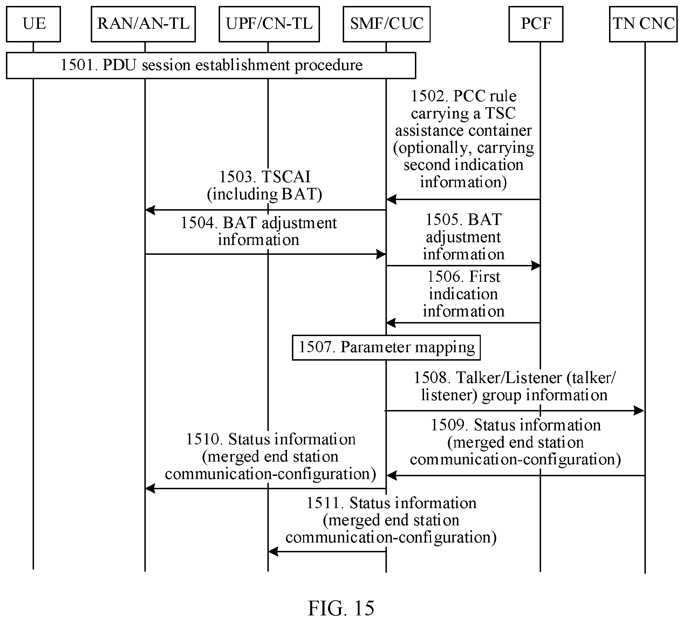

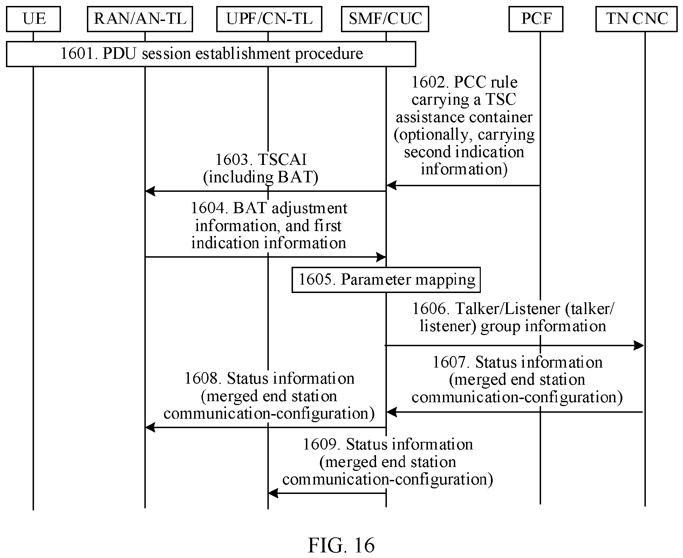

Based on the procedure shown in FIG. 13, FIG. 15 and FIG. 16 respectively show schematic diagrams of signaling exchange in two application scenarios. For details, refer to FIG. 15 and FIG. 16.

In the foregoing procedure shown in FIG. 13, after obtaining the burst arrival time (BAT) adjustment information of the first service flow, the first network element does not immediately determine the attribute information of the first service flow, but determines the attribute information of the first service flow based on the adjusted burst arrival time after receiving the first indication information. Therefore, a problem that the service flow attribute frequently changes due to a change of the burst arrival time can be avoided.

Through the foregoing procedure shown in FIG. 13, when coordinated scheduling optimization occurs, frequent updates of TransmitOffset of a transmission network service calculated based on BAT in the TSCAI/TSCAC and frequent reconfiguration of the TN CNC due to a change of the TSCAI/TSCAC (specifically the BAT) of the service flow can be avoided.

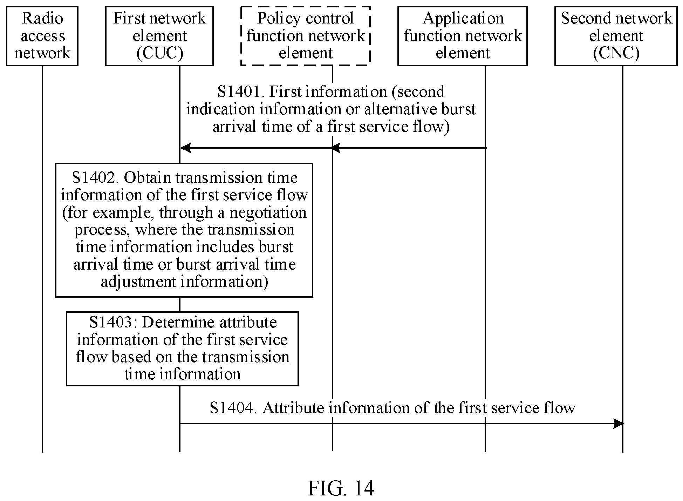

A method for configuring a service flow attribute provided in an embodiment of this application is applicable to the communication system shown in FIG. 11 or FIG. 12. FIG. 14 is a schematic flowchart of a method for configuring a service flow attribute according to an embodiment of this application. The procedure may occur when coordinated scheduling optimization needs to be performed. A first network element in the procedure is a CUC network element. Optionally, an SMF may serve as the CUC (namely, a TN CNC), and a second network element is a CNC. Optionally, an AF may serve as the CNC. The first network element may adjust burst arrival time (BAT) through a negotiation process based on an explicit or implicit indication manner, and determine attribute information of a first service flow by using adjusted burst arrival time.

The first service flow may correspond to one QoS flow, or may correspond to a plurality of QoS flows. This is not limited in this embodiment of this application.

As shown in FIG. 14, a specific procedure of the method may include the following steps.

S1401: The first network element receives first information.

Optionally, the first information is sent by an application or an application function network element to a policy control function network element or a TSCTSF, and then is sent by the policy control function network element or the TSCTSF to the first network element.

Optionally, the first information includes second indication information. The second indication information may indicate that the application function or the application supports adjusting packet sending time or the burst arrival time. Based on the second indication information, the first network element does not immediately determine the attribute information of the first service flow based on the burst arrival time. The first network element may further obtain burst arrival time adjustment information of the first service flow through negotiation based on the second indication information, and determine the attribute information of the first service flow based on the adjusted burst arrival time. The second indication information is sent to the first network element, so that the first network element can be indicated in the explicit manner to determine the service flow attribute based on the adjusted burst arrival time. The second indication information may also be referred to as "an indication of supporting adjusting the burst arrival time". This is not limited in this embodiment of this application.

Optionally, the first information includes alternative burst arrival time of the first service flow. The alternative burst arrival time may be specific burst arrival time (or an offset), or may be a burst arrival time window (or an offset range). The alternative burst arrival time indicates acceptable adjusted time of a service. In addition, the alternative burst arrival time is sent to the first network element, so that the first network element can be indicated in the implicit manner to determine the service flow attribute based on the adjusted burst arrival time.

It is clear that the first information may include both the second indication information and the alternative burst arrival time of the first service flow. This is not limited in this embodiment of this application.

S1402: The first network element obtains transmission time information of the first service flow based on the first information. The transmission time information includes the burst arrival time or the burst arrival time adjustment information. The burst arrival time adjustment information is for determining the adjusted burst arrival time.

In this embodiment of this application, the burst arrival time of the first service flow may include at least one of the following:
downlink TSCAI burst arrival time, to be specific, time when a burst (burst) arrives at an ingress of a radio access network (for example, DL TSCAI Burst Arrival Time in FIG. 4, to be specific, time when the burst (burst) of the first service flow arrives at the NG-RAN);
uplink TSCAI burst arrival time, to be specific, time when the burst (burst) arrives at a terminal (for example, UL TSCAI Burst Arrival Time in FIG. 5, to be specific, time when the burst (burst) of the first service flow arrives at UE);
downlink TSCAC burst arrival time, for example, time when the burst (burst) arrives at an NW-TT on a UPF side; or
uplink TSCAC burst arrival time, for example, time when the burst (burst) arrives at a DS-TT on a UE side.

Optionally, the first network element may obtain the DL TSCAI burst arrival time through calculation based on DL burst arrival time provided by the AF and a DL CN PDB, and obtain the UL TSCAI burst arrival time based on UL burst arrival time provided by the AF and UE-DS-TT residence time. For a specific calculation method, refer to the foregoing related content.

Optionally, the burst arrival time adjustment information is the adjusted burst arrival time, or an offset between the burst arrival time and the adjusted burst arrival time.

Optionally, the transmission time information may be from the radio access network (RAN). For example, after sending TSCAI/a TSCAC (including the BAT) to the radio access network, the first network element receives the BAT adjustment information sent by the radio access network. For another example, after sending the TSCAI/TSCAC (including the BAT) to the radio access network, the first network element receives the same BAT sent by the radio access network, representing that the radio access network acknowledges use of the BAT. For another example, after sending the alternative BAT to the radio access network, the first network element receives the same BAT sent by the radio access network, representing that the radio access network acknowledges use of the alternative BAT. For another example, after sending the alternative BAT to the radio access network, the first network element receives the BAT adjustment information sent by the radio access network.

Optionally, the first network element may further send the alternative burst arrival time to the radio access network. The burst arrival time adjustment information sent by the radio access network may be determined based on the alternative burst arrival time.

S1403: The first network element determines the attribute information of the first service flow based on the foregoing transmission time information.

Optionally, if the transmission time information is the burst arrival time, the first network element determines the attribute information of the first service flow based on the burst arrival time. If the transmission time information is the burst arrival time adjustment information, the first network element determines the attribute information of the first service flow based on the burst arrival time adjustment information or the adjusted burst arrival time.

Optionally, the attribute information of the first service flow may be some parameters in the foregoing talker/listener group information. Optionally, the attribute information that is of the first service flow and that is determined by the first network element based on the adjusted burst arrival time includes at least one of the following: an earliest transmit offset (EarliestTransmitOffset), a latest transmit offset (LatestTransmitOffset), maximum latency (MaxLatency), or sending time (TimeAwareOffset). For definitions of these parameters, refer to the foregoing descriptions.

S1404: The first network element sends the attribute information of the first service flow to a second network element.

Optionally, the first network element may send the attribute information of the first service flow to the second network element by sending the talker/listener group information to the second network element.

After receiving the attribute information of the first service flow, the second network element may determine and generate an E2E forwarding path of the service flow based on the information, and send scheduling parameters to switching nodes; and may further configure a talker and a listener of the first service flow in a transmission network based on the attribute information of the first service flow. For example, the second network element may generate status (status) information based on the attribute information of the first service flow, and send the status information to the first network element, so that the first network element sends the status information to the talker and the listener (for example, in a fully centralized configuration model) of the first service flow. In another possible implementation, the second network element may alternatively directly send the status information to the talker and the listener (for example, in a fully distributed configuration model, or in a centralized network/distributed user configuration model) of the first service flow.

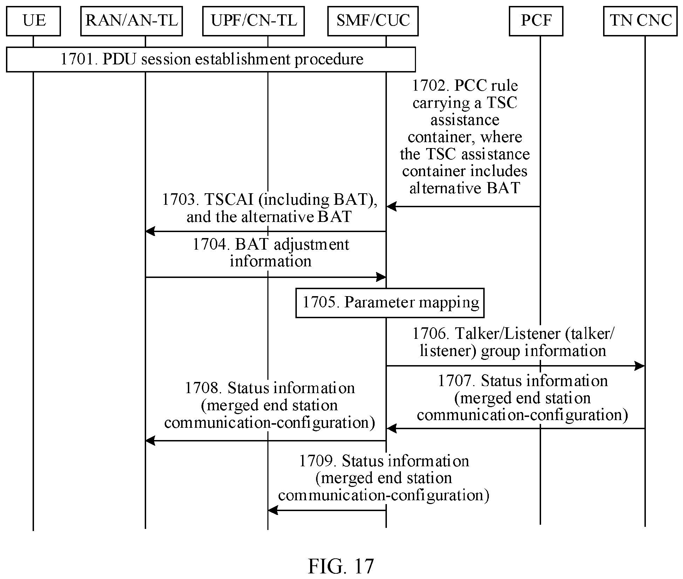

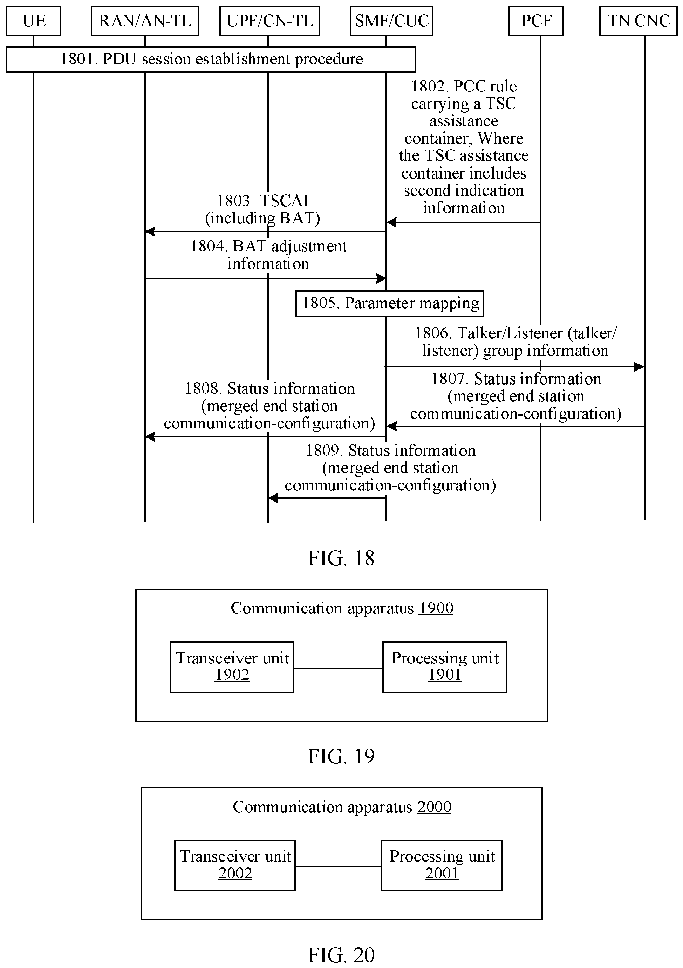

Based on the procedure shown in FIG. 14, FIG. 17 and FIG. 18 respectively show schematic diagrams of signaling exchange in two application scenarios. For details, refer to FIG. 17 and FIG. 18.

In the foregoing procedure described in FIG. 14, after obtaining the burst arrival time (BAT) adjustment information of the first service flow based on the first information (for example, obtaining the BAT adjustment information through the negotiation process), the first network element determines the attribute information of the first service flow based on the adjusted burst arrival time, so that the attribute information of the first service flow is determined based on the adjusted BAT only after the BAT adjustment information is obtained. Therefore, a problem that the service flow attribute frequently changes due to a change of the burst arrival time can be avoided.

Through the foregoing procedure shown in FIG. 14, when coordinated scheduling optimization occurs, frequent updates of TransmitOffset of a transmission network service calculated based on BAT in the TSCAI/TSCAC and frequent reconfiguration of the TN CNC due to a change of the TSCAI/TSCAC (specifically the BAT) of the service flow can be avoided.

### Scenario 1

Refer to FIG. 15. This scenario is an application scenario in the procedure shown in FIG. 13. ARAN is a listener/talker (an AN-TL shown in the figure) in an access network, a UPF is a listener/talker (a CN-TL shown in the figure) in a core network, and an SMF serves as a CUC. The SMF serving as the CUC adjusts burst arrival time (BAT) of a first service flow through negotiation. After receiving first indication information from the RAN, the SMF determines attribute information of the first service flow based on adjusted BAT, to adjust sending time of the first service flow.

As shown in FIG. 15, the procedure includes the following steps.

Step 1501: UE triggers a PDU session establishment procedure.

Optionally, for a specific implementation of the step, refer to the content of step 1001 in FIG. 10.

Step 1502: A PCF sends, to the SMF, a PCC rule carrying a TSC assistance container.

Optionally, for a specific implementation of the step, refer to the content of step 1002 in FIG. 10.

Optionally, in step 1502, the PCF may further send second indication information to the SMF. The second indication information is from an AF or an application, and indicates that the AF or the application supports adjusting packet sending time or burst arrival time (BAT). The second indication information may also be referred to as "an indication of supporting adjusting the BAT".

Step 1503: The SMF sends TSCAI to the RAN, where the TSCAI includes the BAT of the first service flow.

Optionally, the BAT in the TSCAI includes time when a burst arrives at an ingress of the RAN in a downlink direction (for example, DL TSCAI Burst Arrival Time shown in FIG. 4) and/or time when the burst arrives at the UE in an uplink direction (for example, UL TSCAI Burst Arrival Time shown in FIG. 5).

Optionally, the TSCAI may further include flow direction information and a periodicity. The flow direction information indicates whether the first service flow is in the uplink direction or the downlink direction, and the periodicity is an interval between start time of two bursts.

Optionally, the AF determines, based on scheduling information of a TSN stream obtained from a CNC, time when the TSN stream arrives at an ingress of a 5G system, to be specific, time when the TSN stream arrives at an ingress of an NW-TT in the downlink direction (for example, DL Burst Arrival Time in FIG. 4) and time when the TSN stream arrives at an ingress of a DS-TT in the uplink direction (for example, UL Burst Arrival Time in FIG. 5), and provides the information to the SMF via the PCF. Based on the information, the SMF further calculates time when the burst arrives at the RAN in the downlink direction (TSCAI Burst Arrival Time) and time when the burst is sent from the UE in the uplink direction (UL TSCAI Burst Arrival Time). For a method for the SMF to calculate the BAT of the TSCAI, refer to the foregoing related content.

Step 1504: After receiving the BAT, the RAN adjusts the BAT, and feeds back BAT adjustment information to the SMF.

Optionally, the BAT adjustment information may be an offset (offset). The offset is a difference between the BAT and the adjusted BAT, and the adjusted BAT may be determined based on the offset. Optionally, the BAT adjustment information may alternatively be the adjusted BAT. It is clear that, during implementation, the SMF may also directly perform calculation based on the offset.

Step 1505: After receiving the BAT adjustment information, the SMF sends the BAT adjustment information to the PCF.

Optionally, if the BAT is absolute time, the SMF maps the BAT from 5G internal time to external time and then sends the BAT to the PCF.

Step 1506: The PCF sends the first indication information to the SMF.

The foregoing step 1503 to step 1506 are a round of negotiation process, and the BAT adjustment information may be obtained through the foregoing negotiation process.

Optionally, in step 1506, for downlink transmission, after receiving the BAT adjustment information from the SMF, the PCF may send the BAT adjustment information to the AF or the application, so that the AF or the application adjusts the packet sending time based on the BAT adjustment information.

For a meaning of the first indication information, refer to the foregoing descriptions. For example, the first indication information may also be referred to as "an acknowledgment indication", and indicates to perform data transmission based on the adjusted BAT (for example, for the downlink transmission, the packet sending time is determined based on the adjusted BAT). Alternatively, the first indication information may be expressed as follows: The first indication information indicates that the BAT is not adjusted due to cross-layer scheduling optimization. Alternatively, the first indication information may be expressed as follows: The first indication information indicates the SMF to use acknowledged BAT (namely, the adjusted BAT) to determine an attribute of a service flow in a transmission network after receiving the first indication information. In other words, a function of the first indication information is to enable the SMF to determine, based on the first indication information, that BAT parameter negotiation is completed, and immediately determine, based on the adjusted BAT, the attribute information of the corresponding service flow, so that the CNC configures the talker and the listener of the service flow in a transmission network based on the attribute information of the service flow.

Optionally, the PCF may further send the BAT adjustment information to the SMF. In a possible implementation, the PCF may send the BAT adjustment information and the first indication information to the SMF by using one piece of signaling. In another possible implementation, the first indication information may be transmitted by using separate signaling. This is not limited in this embodiment of this application.

Step 1507: After receiving the first indication information, the SMF performs parameter mapping.

The parameter mapping refers to determining talker/listener group information based on information reported by the talker, information reported by the listener, and information such as the foregoing adjusted BAT. The talker/listener group information may also be referred to as merged stream requirements (merged stream requirements). In this embodiment of this application, the attribute information of the first service flow may be determined based on the adjusted BAT through the parameter mapping.

Optionally, the SMF may perform parameter mapping based on the adjusted BAT, or may directly perform parameter mapping based on the offset of the BAT.

Optionally, when performing parameter mapping, the SMF may use the TSCAI BAT or TSCAC BAT. Conversion between the TSCAI BAT and the TSCAC BAT is performed based on the foregoing method.

Optionally, the attribute information that is of the first service flow and that is determined based on the adjusted BAT may include one or more of the following parameters: an earliest transmit offset (EarliestTransmitOffset), a latest transmit offset (LatestTransmitOffset), maximum latency (MaxLatency), and sending time (TimeAwareOffset). For definitions of these parameters, refer to the foregoing descriptions.

Step 1508: The SMF sends the talker/listener group information (or referred to as the merged stream requirements (merged stream requirements)) to the CNC.

After receiving the talker/listener group information, the CNC determines and generates an E2E forwarding path of the service flow based on the talker/listener group information, and sends scheduling parameters to switching nodes. The CNC further determines, based on the talker/listener group information, status (Status) information that needs to be configured for the talker and the listener. The status information may also be referred to as a merged end station communication-configuration (merged end station communication-configuration).

Optionally, for a method for the CNC to determine the status information based on the talker/listener group information and content of the status information, refer to the foregoing related content.

Step 1509: The CNC sends the status information (or referred to as the merged end station communication-configuration (merged end station communication-configuration)) to the SMF.

Step 1510 and step 1511: The SMF separately configures the talker (Talker) and the listener (Listener) based on the status information sent by the CNC.

Optionally, the SMF may send TimeAwareOffset (the packet sending time of the talker) in the status information to the CN-TL and the AN-TL in a transparent container, so that the CN-TL and the AN-TL correspondingly adjust sending time of the traffic.

In a possible implementation, the foregoing negotiation process may be performed for only one round, or may be performed for a plurality of rounds. If the negotiation process is performed for a plurality of rounds, in other rounds of negotiation processes except a last round, the PCF sends the BAT adjustment information to the SMF after receiving the BAT adjustment information, and only in the last round of negotiation process, the PCF sends the first indication information to the SMF after receiving the BAT adjustment information, so that the SMF determines that parameter mapping needs to be performed immediately. In this way, the SMF does not need to calculate the service flow attribute by using unstable BAT.

In a possible implementation, in any case, the PCF does not send the second indication information to the SMF. In other words, the second indication information is not defined in a solution, and only the first indication information is defined. In this case, after receiving the PCC rule from the PCF, the SMF does not immediately perform parameter mapping by default, but performs parameter mapping after receiving the first indication information. In another possible implementation, the first indication information and the second indication information are defined in the solution. If the PCF carries the second indication information when the PCC rule is sent to the SMF, the SMF does not immediately perform parameter mapping, but performs parameter mapping after receiving the first indication information. If the PCF does not carry the second indication information when the PCC rule is sent to the SMF, the SMF may immediately perform parameter mapping.

In the foregoing procedure shown in FIG. 15, the SMF determines, by using the second indication information (namely, an adjustment-acceptable indication) of the AF, that the BAT may be adjusted due to the cross-layer scheduling optimization, and therefore determines that an attribute of a service flow in a transmission network does not need to be immediately sent. The SMF determines, by using the first indication (namely, the acknowledgment indication) of the AF (PCF), that the BAT is no longer adjusted due to the cross-layer scheduling optimization. In this case, the SMF determines the attribute information of the service flow, so that unnecessary parameter adjustment can be avoided.

It should be noted that the foregoing procedure shown in FIG. 15 is merely an example. Some steps in the procedure may be optional steps, and a time sequence of the steps may also be adjusted based on a service requirement. This is not limited in this application.

### Scenario 2

Refer to FIG. 16. This scenario is an application scenario in the procedure shown in FIG. 13. A RAN is a listener/talker (an AN-TL shown in the figure) in an access network, a UPF is a listener/talker (a CN-TL shown in the figure) in a core network, and an SMF serves as a CUC. The SMF serving as the CUC adjusts burst arrival time (BAT) of a first service flow through negotiation. After receiving first indication information from the AF, the SMF determines attribute information of the first service flow based on adjusted BAT, to adjust sending time of the first service flow.

As shown in FIG. 16, the procedure includes the following steps.

Step 1601: UE triggers a PDU session establishment procedure.

Step 1602: A PCF sends, to the SMF, a PCC rule carrying a TSC assistance container.

Step 1603: The SMF sends TSCAI to the RAN, where the TSCAI includes the BAT of the first service flow.

Step 1604: After receiving the BAT, the RAN adjusts the BAT, and feeds back BAT adjustment information and the first indication information to the SMF.

Optionally, the BAT adjustment information may be an offset (offset). The offset is a difference between the BAT and the adjusted BAT, and the adjusted BAT may be determined based on the offset. Optionally, the BAT adjustment information may alternatively be the adjusted BAT.

The foregoing step 1603 and step 1604 are a round of negotiation process, and the BAT adjustment information may be obtained through the foregoing negotiation process.

For a meaning of the first indication information, refer to the foregoing descriptions. For example, the first indication information may also be referred to as "an acknowledgment indication", and indicates to perform data transmission based on the adjusted BAT (for example, for the downlink transmission, the packet sending time is determined based on the adjusted BAT). Alternatively, the first indication information may be expressed as follows: The first indication information indicates that the BAT is not adjusted due to cross-layer scheduling optimization. Alternatively, the first indication information may be expressed as follows: The first indication information indicates the SMF to use acknowledged BAT (namely, the adjusted BAT) to determine an attribute of a service flow in a transmission network after receiving the first indication information. In other words, a function of the first indication information is to enable the SMF to determine, based on the first indication information, that BAT parameter negotiation is completed, and immediately determine, based on the adjusted BAT, the attribute information of the corresponding service flow.

Optionally, the RAN may send the BAT adjustment information and the first indication information to the SMF by using one piece of signaling, or may transmit the first indication information by using separate signaling. This is not limited in this embodiment of this application.

In another implementation, the RAN may send only the first indication information to the SMF, and does not include the BAT adjustment information. For example, when receiving the BAT sent by the SMF, the RAN determines that the BAT may be used, and may send only the first indication information. The SMF performs parameter mapping (step 1605) based on a TSCAC received from the PCF or the stored TSCAI.

Step 1605: After receiving the first indication information, the SMF performs parameter mapping.

Step 1606: The SMF sends the talker/listener group information (or referred to as the merged stream requirements (merged stream requirements)) to the CNC.

Step 1607: The CNC sends the status information (or referred to as the merged end station communication-configuration (merged end station communication-configuration)) to the SMF.

Step 1608 and step 1609: The SMF separately configures the talker (Talker) and the listener (Listener) based on the status information sent by the CNC.

For step 1601 to step 1603 and step 1605 to step 1609 in the foregoing procedure, refer to corresponding steps in FIG. 15.

In a possible implementation, the foregoing negotiation process may be performed for only one round, or may be performed for a plurality of rounds. If the negotiation process is performed for a plurality of rounds, the RAN sends the first indication information to the SMF only in a last round of negotiation process after receiving the BAT adjustment information, so that the SMF determines that parameter mapping needs to be performed immediately. In this way, the SMF does not need to calculate the service flow attribute by using unstable BAT.

In a possible implementation, after receiving the TSCAI from the SMF, the RAN may send only the first indication information to the SMF, and does not send the BAT adjustment information. For example, in the plurality of rounds of negotiation process, the RAN sends only the first indication information to the SMF in the last round of negotiation process.

In a possible implementation, in any case, the PCF does not send the second indication information to the SMF. In other words, the second indication information is not defined in a solution, and only the first indication information is defined. In this case, after receiving the PCC rule from the PCF, the SMF does not immediately perform parameter mapping by default, but performs parameter mapping after receiving the first indication information. In another possible implementation, the first indication information and the second indication information are defined in the solution. If the PCF carries the second indication information when the PCC rule is sent to the SMF, the SMF does not immediately perform parameter mapping, but performs parameter mapping after receiving the first indication information. If the PCF does not carry the second indication information when the PCC rule is sent to the SMF, the SMF may immediately perform parameter mapping.

In the foregoing procedure shown in FIG. 16, in a solution of sending the second indication information to the SMF, the SMF determines, by using the second indication information (namely, an adjustment-acceptable indication) of the AF, that the BAT may be adjusted due to the cross-layer scheduling optimization, and therefore determines that an attribute of a service flow in a transmission network does not need to be immediately sent. The SMF determines, by using the first indication (namely, the acknowledgment indication) of the RAN, that the BAT is no longer adjusted due to the cross-layer scheduling optimization. In this case, the SMF determines the attribute information of the service flow, so that unnecessary parameter adjustment can be avoided.

It should be noted that the foregoing procedure shown in FIG. 16 is merely an example. Some steps in the procedure may be optional steps, and a time sequence of the steps may also be adjusted based on a service requirement. This is not limited in this application.

### Scenario 3

Refer to FIG. 17. This scenario is an application scenario in the procedure shown in FIG. 14. A RAN is a listener/talker (an AN-TL shown in the figure) in an access network, a UPF is a listener/talker (a CN-TL shown in the figure) in a core network, and an SMF serves as a CUC. The SMF serving as the CUC performs a round of negotiation based on an implicit indication (for example, the implicit indication is performed by using alternative BAT), to adjust burst arrival time (BAT) of a first service flow, and determines attribute information of the first service flow based on adjusted BAT to adjust sending time of the first service flow.

As shown in FIG. 17, the procedure includes the following steps.

Step 1701: UE triggers a PDU session establishment procedure.

Step 1702: A PCF sends a PCC rule carrying a TSC assistance container to the SMF. The TSC assistance container includes the alternative BAT (AltenativeBAT) of the first service flow.

The alternative BAT may implicitly indicate that the AF supports adjusting BAT or packet sending time, so that after receiving the alternative BAT, the SMF does not immediately perform parameter mapping nor immediately send the attribute information of the service flow, but performs parameter negotiation.

Step 1703: The SMF sends TSCAI and the alternative BAT to the RAN. The TSCAI includes the BAT of the first service flow.

Step 1704: After receiving the BAT, the RAN adjusts the BAT, and feeds back BAT adjustment information to the SMF.

Optionally, when adjusting the BAT, the RAN may perform adjustment with reference to the alternative BAT. For example, a value in the alternative BAT (window) may be selected for adjustment, or an offset is determined based on the value in the alternative BAT (window). This is not limited in this embodiment of this application.

The foregoing step 1703 and step 1704 are a round of negotiation process, and the BAT adjustment information may be obtained through the foregoing negotiation process.

Step 1705: After receiving the BAT adjustment information, the SMF performs parameter mapping. In this case, when the SMF receives the BAT adjustment information adjusted with reference to the alternative BAT, the AF may accept the BAT adjustment information by default, so that there is no a plurality of rounds of negotiation. Therefore, the SMF may directly perform parameter mapping based on the BAT adjustment information.

Step 1706: The SMF sends the talker/listener group information (or referred to as the merged stream requirements (merged stream requirements)) to the CNC.

Step 1707: The CNC sends the status information (or referred to as the merged end station communication-configuration (merged end station communication-configuration)) to the SMF.

Step 1708 and step 1709: The SMF separately configures the talker (Talker) and the listener (Listener) based on the status information sent by the CNC.

For specific implementations of some steps in the foregoing procedure, refer to related steps in FIG. 15.

The foregoing procedure is applicable to a scenario of a round of negotiation. After receiving the BAT adjustment information, the SMF does not perform a negotiation process any longer, but performs parameter mapping, and sends the attribute information of the first service flow to the CNC, to configure switching nodes, the talker, and the listener.

In the foregoing procedure shown in FIG. 17, the SMF determines, by using the implicit indication of the AF, that the BAT may be adjusted due to cross-layer scheduling optimization, and therefore determines that an attribute of a service flow in a transmission network does not need to be immediately sent. The SMF determines, by using an implicit acknowledgment of the RAN, that the BAT is no longer adjusted due to the cross-layer scheduling optimization. In this case, the SMF determines the attribute information of the service flow, so that unnecessary parameter adjustment can be avoided.

The foregoing procedure shown in FIG. 17 is merely an example. Some steps in the procedure may be optional steps, and a time sequence of the steps may also be adjusted based on a service requirement. This is not limited in this application.

### Scenario 4

Refer to FIG. 18. This scenario is an application scenario in the procedure shown in FIG. 14. A RAN is a listener/talker (an AN-TL shown in the figure) in an access network, a UPF is a listener/talker (a CN-TL shown in the figure) in a core network, and an SMF serves as a CUC. The SMF serving as the CUC performs a round of negotiation based on an explicit indication (for example, second indication information) to adjust burst arrival time (BAT) of a first service flow, and determines attribute information of the first service flow based on adjusted BAT to adjust sending time of the first service flow.

As shown in FIG. 18, the procedure includes the following steps.

Step 1801: UE triggers a PDU session establishment procedure.

Step 1802: A PCF sends a PCC rule carrying a TSC assistance container to the SMF. The TSC assistance container includes the second indication information.

The second indication information may also be referred to as "an indication of supporting adjusting the BAT". The second indication information is from an AF or an application, and indicates that the AF or the application supports adjusting packet sending time or the BAT.

The second indication information may explicitly indicate that the AF supports adjusting the BAT or the packet sending time, so that after receiving the second indication information, the SMF does not immediately perform parameter mapping nor immediately send the attribute information of the service flow, but performs a parameter negotiation process.

Step 1803: The SMF sends TSCAI to the RAN, where the TSCAI includes the BAT of the first service flow.

Step 1804: After receiving the BAT, the RAN adjusts the BAT, and feeds back BAT adjustment information to the SMF.

The foregoing step 1803 and step 1804 are a round of negotiation process, and the BAT adjustment information may be obtained through the foregoing negotiation process.

Step 1805: After receiving the BAT adjustment information, the SMF performs parameter mapping.

Step 1806: The SMF sends the talker/listener group information (or referred to as the merged stream requirements (merged stream requirements)) to the CNC.

Step 1807: The CNC sends the status information (or referred to as the merged end station communication-configuration (merged end station communication-configuration)) to the SMF.

Step 1808 and step 1809: The SMF separately configures the talker (Talker) and the listener (Listener) based on the status information sent by the CNC.

For specific implementations of some steps in the foregoing procedure, refer to related steps in FIG. 15.

The foregoing procedure is applicable to a scenario of a round of negotiation. After receiving the BAT adjustment information, the SMF does not perform a negotiation process any longer, but performs parameter mapping, and sends the attribute information of the first service flow to the CNC, to configure switching nodes, the talker, and the listener.

In the foregoing procedure shown in FIG. 18, the SMF determines, by using an explicit indication of the AF, that the BAT may be adjusted due to cross-layer scheduling optimization, and therefore determines that an attribute of a service flow in a transmission network does not need to be immediately sent. The SMF determines, by using an implicit acknowledgment of the RAN, that the BAT is no longer adjusted due to the cross-layer scheduling optimization. In this case, the SMF determines the attribute information of the service flow, so that unnecessary parameter adjustment can be avoided.

The foregoing procedure shown in FIG. 18 is merely an example. Some steps in the procedure may be optional steps, and a time sequence of the steps may also be adjusted based on a service requirement. This is not limited in this application.

Based on a same technical conception, an embodiment of this application further provides a communication apparatus. The communication apparatus may perform the procedures performed by the first network element (for example, the SMF) in FIG. 13, FIG. 15, and FIG. 16, or perform the procedures performed by the first network element (for example, the SMF) in FIG. 14, FIG. 17, and FIG. 18.

As shown in FIG. 19, the communication apparatus 1900 may include a processing unit 1901 and a transceiver unit 1902. The transceiver unit 1902 is coupled to the processing unit 1901.

When the communication apparatus 1900 performs the procedures performed by the first network element (for example, the SMF) in FIG. 13, FIG. 15, or FIG. 16, functions of the foregoing functional modules may be as follows:
The processing unit 1901 is configured to: obtain transmission time information of a first service flow, where the transmission time information includes burst arrival time or burst arrival time adjustment information, and the burst arrival time adjustment information is for determining adjusted burst arrival time; after the transceiver unit receives first indication information, determine attribute information of the first service flow based on the transmission time information; and send the attribute information of the first service flow to a second network element by using the transceiver unit 1902.

Optionally, the first indication information is from an AF network element, a PCF network element, or a TSCTSF network element.

Optionally, the first indication information is an acknowledgment indication. Alternatively, the first indication information is for acknowledging the transmission time information or acknowledging that data transmission is performed based on the transmission time information. Alternatively, the first indication information indicates that the burst arrival time is not adjusted due to cross-layer scheduling optimization.

Optionally, the transceiver unit 1902 is further configured to: before the processing unit 1901 obtains the transmission time information of the first service flow, receive second indication information. The processing unit 1901 is specifically configured to obtain the burst arrival time adjustment information of the first service flow based on the second indication information.

Optionally, the second indication information is from the AF network element, the PCF network element, or the TSCTSF network element.

Optionally, the transmission time information is from a radio access network network element, the AF network element, the PCF network element, or the TSCTSF network element.

Optionally, the processing unit 1901 is specifically configured to: send time sensitive communication assistance information to the radio access network by using the transceiver unit 1902, where the time sensitive communication assistance information includes the burst arrival time, and the burst arrival time includes time when a burst in a downlink direction arrives at an ingress of the radio access network, and/or time when the burst in an uplink direction arrives at a terminal; receive the burst arrival time adjustment information from the radio access network by using the transceiver unit 1902; send the burst arrival time adjustment information to the application function by using the transceiver unit 1902; and receive the first indication information from the application function by using the transceiver unit 1902.

Optionally, the burst arrival time includes at least one of the following: uplink TSCAI burst arrival time, downlink TSCAI burst arrival time, uplink TSCAC burst arrival time, or downlink TSCAC burst arrival time.

Optionally, the burst arrival time adjustment information is the adjusted burst arrival time, or an offset between the burst arrival time and the adjusted burst arrival time.

Optionally, the attribute information of the first service flow includes at least one of the following:
an earliest transmit offset, where the earliest transmit offset is an earliest offset of when a talker sends the first data frame in a sending periodicity relative to a start time point of the sending periodicity;
a latest transmit offset, where the latest transmit offset is a latest offset of when the talker sends the first data frame in the sending periodicity relative to the start time point of the sending periodicity;
maximum latency, where the maximum latency is maximum latency of a data frame from the talker to a listener; or
sending time, where the sending time is a time offset used by the talker to transmit a data packet, and the time offset is between the earliest transmit offset and the latest transmit offset.

Optionally, the first network element is a session management function network element. The session management function network element is configured as a centralized user configuration network element. The second network element is a centralized network configuration network element.

When the communication apparatus 1900 performs the procedures performed by the first network element (for example, the SMF) in FIG. 14, FIG. 17, or FIG. 18, functions of the foregoing functional modules may be as follows:
The transceiver unit 1902 is configured to receive first information, where the first information includes second indication information and/or alternative burst arrival time of a first service flow.

The processing unit 1901 is configured to: obtain transmission time information of the first service flow based on the first information, where the transmission time information includes burst arrival time or burst arrival time adjustment information, and the burst arrival time adjustment information is for determining adjusted burst arrival time; determine attribute information of the first service flow based on the transmission time information; and send the attribute information of the first service flow to a second network element by using the transceiver unit 1902.

Optionally, the first information is from an AF network element, a PCF network element, or a network element.

Optionally, the second indication information indicates that the application function supports adjusting the burst arrival time or packet sending time.

Optionally, the transmission time information is from a radio access network network element.

Optionally, the burst arrival time adjustment information is determined by the radio access network network element based on the alternative burst arrival time.

Optionally, the burst arrival time includes at least one of the following: uplink TSCAI burst arrival time, downlink TSCAI burst arrival time, uplink TSCAC burst arrival time, or downlink TSCAC burst arrival time.

Optionally, the burst arrival time adjustment information is the adjusted burst arrival time, or an offset between the burst arrival time and the adjusted burst arrival time.

Optionally, the attribute information of the first service flow includes at least one of the following:
an earliest transmit offset, where the earliest transmit offset is an earliest offset of when a talker sends the first data frame in a sending periodicity relative to a start time point of the sending periodicity;
a latest transmit offset, where the latest transmit offset is a latest offset of when the talker sends the first data frame in the sending periodicity relative to the start time point of the sending periodicity;
maximum latency, where the maximum latency is maximum latency of a data frame from the talker to a listener; or
sending time, where the sending time is a time offset used by the talker to transmit a data packet, and the time offset is between the earliest transmit offset and the latest transmit offset.

Optionally, the first network element is a session management function network element. The session management function network element is configured as a centralized user configuration network element. The second network element is a centralized network configuration network element.

The foregoing communication apparatus 1900 can implement the method steps in the foregoing method embodiments, and can achieve a same technical effect. A part the same as the method embodiments in embodiments and beneficial effects thereof are not described in detail herein again.

Based on a same technical conception, an embodiment of this application further provides a communication apparatus. The communication apparatus may perform the procedures performed by the radio access network (RAN) or the policy control function (PCF) in FIG. 13, FIG. 15, and FIG. 16.

As shown in FIG. 20, the communication apparatus 2000 may include a processing unit 2001 and a transceiver unit 2002. The transceiver unit 2002 is coupled to the processing unit 2001.

The processing unit 2001 is configured to: determine that data transmission is performed based on acknowledged transmission time information of a first service flow, or burst arrival time of the first service flow is not adjusted due to cross-layer scheduling optimization, where the transmission time information includes the burst arrival time or burst arrival time adjustment information, and the burst arrival time adjustment information is for determining adjusted burst arrival time; and send first indication information to a first network element by using the transceiver unit 2002.

Optionally, the first indication information is an acknowledgment indication. Alternatively, the first indication information is for acknowledging the transmission time information or acknowledging that data transmission is performed based on the transmission time information. Alternatively, the first indication information indicates that the burst arrival time is not adjusted due to the cross-layer scheduling optimization.

Optionally, before sending the first indication information to the first network element by using the transceiver unit 2002, the processing unit 2001 further sends second indication information to the first network element by using the transceiver unit 2002. The second indication information indicates that an application function supports adjusting the burst arrival time or packet sending time.

The foregoing communication apparatus 2000 can implement the method steps in the foregoing method embodiments, and can achieve a same technical effect. A part the same as the method embodiments in embodiments and beneficial effects thereof are not described in detail herein again.

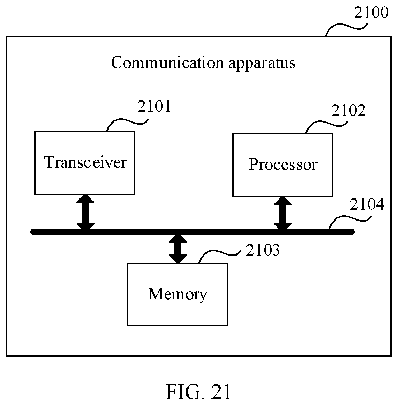

For ease of understanding, FIG. 21 shows only a structure necessary for a communication apparatus 2100 to perform the methods shown in this application, and no limitation is imposed on that the communication apparatus may have more components in this application. The communication apparatus 2100 may be configured to perform steps performed by a related network element in the foregoing method embodiments. For example, the related network element may be a first network element (such as an SMF), a PCF, or a RAN.

The communication apparatus 2100 may include a transceiver 2101, a memory 2103, and a processor 2102, and the transceiver 2101, the memory 2103, and the processor 2102 may be connected by using a bus 2104. The transceiver 2101 may be configured to perform communication by the communication apparatus, for example, configured to send or receive a signal. The memory 2103 is coupled to the processor 2102, and may be configured to store a program and data that are necessary for implementing functions of the communication apparatus 2100. The memory 2103 and the processor 2102 may be integrated or may be independent of each other.

For example, the transceiver 2101 may be a communication port, for example, a communication port (or referred to as an interface) used for communication between network elements. The transceiver 2101 may also be referred to as a transceiver unit or a communication unit. The processor 2102 may be implemented by using a processing chip or a processing circuit. The transceiver 2101 may receive or send information in a wireless manner or a wired manner.

In addition, based on an actual use requirement, a communication apparatus provided in embodiments of this application may include a processor, and the processor invokes an external transceiver and/or memory to implement the foregoing functions, steps, or operations. The communication apparatus may further include a memory, and the processor invokes and executes a program stored in the memory, to implement the foregoing functions, steps, or operations. Alternatively, the communication apparatus may include a processor and a transceiver (or a communication interface), and the processor invokes and executes a program stored in an external memory, to implement the foregoing functions, steps, or operations. Alternatively, the communication apparatus may include a processor, a memory, and a transceiver.

Based on a same idea as the foregoing method embodiments, an embodiment of this application further provides a computer-readable storage medium. The computer-readable storage medium stores program instructions (or referred to as a computer program or instructions). When the program instructions are executed by a processor, a computer is enabled to perform the operations performed by the first network element, the radio access network, or the policy control function in any one of the foregoing method embodiments and the possible implementations of the method embodiments.

Based on a same idea as the foregoing method embodiments, this application further provides a computer program product, including program instructions. When the computer program product is invoked and executed by a computer, the computer may be enabled to implement the operations performed by the first network element, the radio access network, or the policy control function in any one of the foregoing method embodiments and the possible implementations of the method embodiments.

Based on a same concept as the foregoing method embodiments, this application further provides a chip or a chip system. The chip is coupled to a transceiver, and is configured to implement the operations performed by the first network element, the radio access network, or the policy control function in any one of the foregoing method embodiments and the possible implementations of the method embodiments. The chip system may include the chip and components such as a memory and a communication interface.

Based on a same concept as the foregoing method embodiments, an embodiment of this application further provides a communication system. Optionally, the communication system includes a first network element (for example, an SMF configured as a CUC), a second network element (for example, a CNC), and a third network element (for example, a PCF or a RAN). The communication system may implement the procedure shown in FIG. 13, FIG. 15, or FIG. 16. Optionally, the communication system includes a first network element (for example, an SMF configured as a CUC), a second network element (for example, a CNC), and a third network element (for example, a PCF). The communication system may implement the procedure shown in FIG. 14, FIG. 17, or FIG. 18.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the methods, the devices (systems), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operation steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for configuring a service flow attribute, wherein the method comprises:
obtaining, by a first network element, transmission time information of a first service flow, wherein the transmission time information comprises burst arrival time or burst arrival time adjustment information, and the burst arrival time adjustment information is for determining adjusted burst arrival time;
after receiving first indication information, determining, by the first network element, attribute information of the first service flow based on the transmission time information; and
sending, by the first network element, the attribute information of the first service flow to a second network element.

2. The method according to claim 1, wherein the first indication information is from an application function AF network element, a policy control function PCF network element, or a time sensitive communication time synchronization function TSCTSF network element.

3. The method according to claim 1 or 2, wherein
the first indication information is an acknowledgment indication; or
the first indication information is for acknowledging the transmission time information or acknowledging that data transmission is performed based on the transmission time information; or
the first indication information indicates that the burst arrival time is not adjusted due to cross-layer scheduling optimization.

4. The method according to any one of claims 1 to 3, wherein before the obtaining, by a first network element, transmission time information of a first service flow, the method further comprises:
receiving, by the first network element, second indication information, wherein the second indication information indicates that the application function or an application supports adjusting packet sending time or burst arrival time, or indicates that the first network element does not immediately determine attribute information of the first service flow based on burst arrival time.

5. The method according to claim 4, wherein the second indication information is from the application function AF network element, the policy control function PCF network element, or the time sensitive communication time synchronization function TSCTSF network element.

6. The method according to any one of claims 1 to 5, wherein the obtaining, by a first network element, burst arrival time adjustment information of a first service flow, and receiving first information comprises:
sending, by the first network element, time sensitive communication assistance information to a radio access network, wherein the time sensitive communication assistance information comprises the burst arrival time, and the burst arrival time comprises time when a burst arrives at an ingress of the radio access network in a downlink direction, and/or time when the burst arrives at a terminal in an uplink direction;
receiving, by the first network element, the burst arrival time adjustment information from the radio access network;
sending, by the first network element, the burst arrival time adjustment information to the application function; and
receiving, by the first network element, the first indication information from the application function.

7. The method according to any one of claims 1 to 6, wherein the transmission time information is from the radio access network network element, the application function AF network element, the policy control function PCF network element, or the time sensitive communication time synchronization function TSCTSF network element.

8. The method according to any one of claims 1 to 7, wherein the burst arrival time comprises at least one of the following:
uplink time sensitive communication assistance information TSCAI burst arrival time;
downlink time sensitive communication assistance information TSCAI burst arrival time;
uplink time sensitive communication assistance container TSCAC burst arrival time; or
downlink time sensitive communication assistance container TSCAC burst arrival time.

9. The method according to any one of claims 1 to 8, wherein the burst arrival time adjustment information is the adjusted burst arrival time, or an offset between the burst arrival time and the adjusted burst arrival time.

10. The method according to any one of claims 1 to 9, wherein the attribute information of the first service flow comprises at least one of the following:
an earliest transmit offset, wherein the earliest transmit offset is an earliest offset of when a talker sends the first data frame in a sending periodicity relative to a start time point of the sending periodicity;
a latest transmit offset, wherein the latest transmit offset is a latest offset of when the talker sends the first data frame in the sending periodicity relative to the start time point of the sending periodicity;
maximum latency, wherein the maximum latency is maximum latency of a data frame from the talker to a listener; or
sending time, wherein the sending time is a time offset used by the talker to transmit a data packet, and the time offset is between the earliest transmit offset and the latest transmit offset.

11. The method according to any one of claims 1 to 10, wherein the first network element is a session management function network element, the session management function network element is configured as a centralized user configuration network element, and the second network element is a centralized network configuration network element.

12. A method for configuring a service flow attribute, wherein the method comprises:
receiving, by a first network element, first information, wherein the first information comprises second indication information and/or alternative burst arrival time of a first service flow;
obtaining, by the first network element, transmission time information of the first service flow based on the first information, wherein the transmission time information comprises burst arrival time or burst arrival time adjustment information, and the burst arrival time adjustment information is for determining adjusted burst arrival time;
determining, by the first network element, attribute information of the first service flow based on the transmission time information; and
sending, by the first network element, the attribute information of the first service flow to a second network element.

13. The method according to claim 12, wherein the first information is from an application function AF network element, a policy control function PCF network element, or a time sensitive communication time synchronization function TSCTSF network element.

14. The method according to claim 12 or 13, wherein the second indication information indicates that the application function supports adjusting burst arrival time or packet sending time.

15. The method according to any one of claims 12 to 14, wherein the transmission time information is from a radio access network network element.

16. The method according to claim 15, wherein the burst arrival time adjustment information is determined by the radio access network network element based on the alternative burst arrival time.

17. The method according to any one of claims 12 to 16, wherein the burst arrival time comprises at least one of the following:
uplink time sensitive communication assistance information TSCAI burst arrival time;
downlink time sensitive communication assistance information TSCAI burst arrival time;
uplink time sensitive communication assistance container TSCAC burst arrival time; or
downlink time sensitive communication assistance container TSCAC burst arrival time.

18. The method according to any one of claims 12 to 17, wherein the burst arrival time adjustment information is the adjusted burst arrival time, or an offset between the burst arrival time and the adjusted burst arrival time.

19. The method according to any one of claims 12 to 18, wherein the attribute information of the first service flow comprises at least one of the following:
an earliest transmit offset, wherein the earliest transmit offset is an earliest offset of when a talker sends the first data frame in a sending periodicity relative to a start time point of the sending periodicity;
a latest transmit offset, wherein the latest transmit offset is a latest offset of when the talker sends the first data frame in the sending periodicity relative to the start time point of the sending periodicity;
maximum latency, wherein the maximum latency is maximum latency of a data frame from the talker to a listener; or
sending time, wherein the sending time is a time offset used by the talker to transmit a data packet, and the time offset is between the earliest transmit offset and the latest transmit offset.

20. The method according to any one of claims 12 to 19, wherein the first network element is a session management function network element, the session management function network element is configured as a centralized user configuration network element, and the second network element is a centralized network configuration network element.

21. A method for configuring a service flow attribute, wherein the method is applied to a first network element, and the method comprises:
receiving a time window of time sensitive communication assistance container burst arrival time of a first service flow;
obtaining an offset of time sensitive communication assistance information burst arrival time of the first service flow, wherein the offset is determined based on the time window of the time sensitive communication assistance container burst arrival time;
determining attribute information of the first service flow based on the offset; and
sending the attribute information of the first service flow to a second network element.

22. The method according to claim 21, wherein the receiving a time window of time sensitive communication assistance container burst arrival time of a first service flow comprises:
receiving, from a policy control function network element, the time window of the time sensitive communication assistance container burst arrival time of the first service flow.

23. The method according to claim 22, wherein the time window of the time sensitive communication assistance container burst arrival time is from an application function network element or a time sensitive communication time synchronization function network element.

24. The method according to any one of claims 21 to 23, wherein the time window of the time sensitive communication assistance container burst arrival time is comprised in a time sensitive communication assistance container.

25. The method according to claim 24, wherein the obtaining an offset of time sensitive communication assistance information burst arrival time of the first service flow comprises:
determining time sensitive communication assistance information based on the time sensitive communication assistance container, wherein the time sensitive communication assistance information comprises a time window of the time sensitive communication assistance information burst arrival time;
sending the time window of the time sensitive communication assistance information burst arrival time to a radio access network network element; and
receiving the offset from the radio access network network element, wherein the time sensitive communication assistance information burst arrival time corresponding to the offset is a value in the time window of the time sensitive communication assistance information burst arrival time.

26. The method according to any one of claims 21 to 25, wherein the offset is from a radio access network network element.

27. The method according to claim 26, wherein the offset is determined by the radio access network network element based on the time window of the time sensitive communication assistance container burst arrival time.

28. The method according to any one of claims 21 to 27, wherein the attribute information of the first service flow comprises one or more of the following:
an earliest transmit offset, wherein the earliest transmit offset is an earliest offset of a time point at which a talker sends the first data frame in a periodicity relative to a start time point of the periodicity;
a latest transmit offset, wherein the latest transmit offset is a latest offset of the time point at which the talker sends the first data frame in the periodicity relative to the start time point of the periodicity;
maximum latency, wherein the maximum latency is maximum latency of a data frame from the talker to a listener; or
sending time, wherein the sending time is a time offset used by the talker to transmit a data frame, and the time offset is between the earliest transmit offset and the latest transmit offset.

29. The method according to any one of claims 21 to 28, wherein the first network element is a session management function network element, the session management function network element is configured as a centralized user configuration network element, and the second network element is a centralized network configuration network element.

30. A method for configuring a service flow attribute, wherein the method comprises:
determining that data transmission is performed based on acknowledged transmission time information of a first service flow, or burst arrival time of the first service flow is not adjusted due to cross-layer scheduling optimization, wherein the transmission time information comprises the burst arrival time or burst arrival time adjustment information, and the burst arrival time adjustment information is for determining adjusted burst arrival time; and
sending first indication information to a first network element.

31. The method according to claim 30, wherein the first indication information is an acknowledgment indication, or the first indication information is for acknowledging the transmission time information or acknowledging that data transmission is performed based on the transmission time information, or the first indication information indicates that the burst arrival time is not adjusted due to the cross-layer scheduling optimization.

32. The method according to claim 30 or 31, wherein before the sending first indication information to a first network element, the method further comprises:
sending second indication information to the first network element, wherein the second indication information indicates that an application function supports adjusting burst arrival time or packet sending time.

33. A communication system, wherein the communication system comprises a first network element, a second network element, and a third network element, wherein
the first network element is configured to perform the method according to any one of claims 1 to 11, and the third network element is configured to perform the method according to any one of claims 30 to 32; and
the second network element is configured to receive attribute information of a first service flow from the first network element.

34. A communication system, wherein the communication system comprises a first network element and a second network element, wherein the first network element is configured to perform the method according to any one of claims 12 to 20; and
the second network element is configured to receive attribute information of a first service flow from the first network element.

35. A communication system, wherein the communication system comprises a first network element and a second network element, wherein the first network element is configured to perform the method according to any one of claims 21 to 29; and
the second network element is configured to receive attribute information of a first service flow from the first network element.

36. A communication apparatus, wherein the communication apparatus comprises a processing unit and a transceiver unit, wherein
the processing unit is configured to: obtain transmission time information of a first service flow, wherein the transmission time information comprises burst arrival time or burst arrival time adjustment information, and the burst arrival time adjustment information is for determining adjusted burst arrival time;
after the transceiver unit receives first indication information, determine attribute information of the first service flow based on the transmission time information; and
send the attribute information of the first service flow to a second network element by using the transceiver unit.

37. A communication apparatus, wherein the communication apparatus comprises a processing unit and a transceiver unit, wherein
the transceiver unit is configured to receive first information, wherein the first information comprises second indication information and/or alternative burst arrival time of a first service flow; and
the processing unit is configured to: obtain transmission time information of the first service flow based on the first information, wherein the transmission time information comprises burst arrival time or burst arrival time adjustment information, and the burst arrival time adjustment information is for determining adjusted burst arrival time; determine attribute information of the first service flow based on the transmission time information; and send the attribute information of the first service flow to a second network element by using the transceiver unit.

38. A communication apparatus, wherein the communication apparatus comprises a processing unit and a transceiver unit, wherein
the processing unit is configured to: determine that data transmission is performed based on acknowledged transmission time information of a first service flow, or burst arrival time of the first service flow is not adjusted due to cross-layer scheduling optimization, wherein the transmission time information comprises the burst arrival time or burst arrival time adjustment information, and the burst arrival time adjustment information is for determining adjusted burst arrival time; and
send first indication information to a first network element by using the transceiver unit.

39. A communication apparatus, wherein the communication apparatus comprises a processing unit and a transceiver unit, wherein
the transceiver unit is configured to receive a time window of time sensitive communication assistance container burst arrival time of a first service flow;
the processing unit is configured to obtain an offset of a time sensitive communication assistance information burst arrival time of the first service flow, wherein the offset is determined based on the time window of the time sensitive communication assistance container burst arrival time;
the processing unit is further configured to determine attribute information of the first service flow based on the offset; and
the transceiver unit is further configured to send the attribute information of the first service flow to a second network element.

40. A communication apparatus, wherein the communication apparatus comprises one or more processors and one or more memories, wherein the one or more memories store one or more computer programs, the one or more computer programs comprise instructions, and when the instructions are executed by the one or more processors, the communication device is enabled to perform the method according to any one of claims 1 to 11, or perform the method according to any one of claims 12 to 20, or perform the method according to any one of claims 21 to 29, or perform the method according to any one of claims 30 to 32.

41. A computer-readable storage medium, wherein the computer-readable storage medium comprises a computer program, and when the computer program is run on a computing device, the computing device is enabled to perform the method according to any one of claims 1 to 11, or perform the method according to any one of claims 12 to 20, or perform the method according to any one of claims 21 to 29, or perform the method according to any one of claims 30 to 32.

42. A chip, wherein the chip is coupled to a memory, and is configured to read and execute program instructions stored in the memory, to implement the method according to any one of claims 1 to 11, or perform the method according to any one of claims 12 to 20, or perform the method according to any one of claims 21 to 29, or perform the method according to any one of claims 30 to 32.

43. A computer program product, wherein when the computer program product is invoked by a computer, the computer is enabled to perform the method according to any one of claims 1 to 11, or perform the method according to any one of claims 12 to 20, or perform the method according to any one of claims 21 to 29, or perform the method according to any one of claims 30 to 32.

44. A communication method, wherein the method comprises:
receiving, by a first network element, a time window of time sensitive communication assistance container burst arrival time of a first service flow;
obtaining, by the first network element, an offset of time sensitive communication assistance information burst arrival time of the first service flow, wherein the offset is determined based on the time window of the time sensitive communication assistance container burst arrival time;
determining, by the first network element, attribute information of the first service flow based on the offset;
sending, by the first network element, the attribute information of the first service flow to a second network element; and
receiving, by the second network element, the attribute information of the first service flow from the first network element.

45. The method according to claim 44, wherein the receiving, by a first network element, a time window of time sensitive communication assistance container burst arrival time of a first service flow comprises:
receiving, by the first network element, the time window of the time sensitive communication assistance container burst arrival time of the first service flow from a policy control function network element; and
the method further comprises:
sending, by the policy control function network element, the time window of the time sensitive communication assistance container burst arrival time of the first service flow to the first network element.

46. The method according to claim 45, wherein the time window of the time sensitive communication assistance container burst arrival time is from an application function network element or a time sensitive communication time synchronization function network element.

47. The method according to any one of claims 44 to 46, wherein the time window of the time sensitive communication assistance container burst arrival time is comprised in a time sensitive communication assistance container.

48. The method according to claim 47, wherein the obtaining, by the first network element, an offset of time sensitive communication assistance information burst arrival time of the first service flow comprises:
determining, by the first network element, time sensitive communication assistance information based on the time sensitive communication assistance container, wherein the time sensitive communication assistance information comprises a time window of the time sensitive communication assistance information burst arrival time;
sending, by the first network element, the time window of the time sensitive communication assistance information burst arrival time to a radio access network network element;
receiving, by the radio access network network element, the time window of the time sensitive communication assistance information burst arrival time from the first network element;
sending, by the radio access network network element, the offset to the first network element, wherein the time sensitive communication assistance information burst arrival time corresponding to the offset is a value in the time window of the time sensitive communication assistance information burst arrival time; and
receiving, by the first network element, the offset from the radio access network network element.

49. The method according to any one of claims 44 to 48, wherein the offset is from the radio access network network element.

50. The method according to claim 49, wherein the offset is determined by the radio access network network element based on the time window of the time sensitive communication assistance container burst arrival time.

51. The method according to any one of claims 44 to 50, wherein the attribute information of the first service flow comprises one or more of the following:
an earliest transmit offset, wherein the earliest transmit offset is an earliest offset of a time point at which a talker sends the first data frame in a periodicity relative to a start time point of the periodicity;
a latest transmit offset, wherein the latest transmit offset is a latest offset of the time point at which a talker sends the first data frame in the periodicity relative to the start time point of the periodicity;
maximum latency, wherein the maximum latency is maximum latency of a data frame from the talker to a listener; or
sending time, wherein the sending time is a time offset used by the talker to transmit a data frame, and the time offset is between the earliest transmit offset and the latest transmit offset.

52. The method according to any one of claims 44 to 51, wherein the first network element is a session management function network element, the session management function network element is configured as a centralized user configuration network element, and the second network element is a centralized network configuration network element.
